# EUROPÄISCHE PATENTSCHRIFT

(11) **EP 3 489 693 B1**
(45) Veröffentlichungstag und Bekanntmachung des Hinweises auf die Patenterteilung: **09.09.2020**
(21) Anmeldenummer: 18207543.2
(22) Anmeldetag: 21.11.2018
(51) Int. Cl.: G01N 35/00, G01N 35/10, B01L 3/02, G01F 25/00

(54) **VERFAHREN ZUM STEUERN EINER PIPETTIERVORRICHTUNG**
METHOD FOR CONTROLLING A PIPETTE DEVICE
PROCÉDÉ DE COMMANDE D'UN DISPOSITIF DE PIPETAGE

(30) Priorität: 22.11.2017 EP 17202965
(43) Veröffentlichungstag der Anmeldung: 29.05.2019
(73) Patentinhaber: BRAND GMBH + CO KG, 97877 Wertheim (DE)
(72) Erfinder: Berberich, Christian, 63930 Neunkirchen (DE); Gehrig, Steffen, 74731 Walldürn (DE); Ettig, Wolfgang, 97900 Külsheim (DE); Peszleg, Benjamin, 97877 Wertheim (DE); Schaub, Burkhard, 97776 Eußenheim (DE)
(74) Vertreter: Von Rohr Patentanwälte Partnerschaft mbB

(56) Entgegenhaltungen:
- WO-A1-2013/167594
- WO-A1-2017/151516
- DE-A1-102007 010 345
- DE-A1-102010 035 599
- DE-A1-102012 209 314
- DE-U1-202014 006 241

## Beschreibung

Die vorliegende Erfindung betrifft ein Verfahren zum Steuern einer Pipettiervorrichtung für Dosierflüssigkeit mit einer mehrkanaligen, automatisierten Mikrodosiereinheit, wobei die Pipettiervorrichtung aufweist
- eine Luftpolster-Kolbenhubpipette mit je Kanal einer Zylinder-Kolben-Einheit mit einer Dosierkammer mit einem durch Bewegung des Kolbens veränderlichen Luftvolumen und einer mit der Dosierkammer strömungstechnisch verbundenen Koppelstelle, an der eine ein radial elastisch verformbares Ausstoßende aufweisende Pipettenspitze ankoppelbar, insbesondere aufsteckbar, ist,
- eine Mikrodosiereinheit mit einem in mindestens einem Parameter einstellbaren Aktuator je Kanal und
- eine elektronische Steuereinrichtung,
wobei die Kolbenhubpipette wahlweise alleine oder mitsamt der Mikrodosiereinheit in verschiedene Betriebspositionen verfahrbar ist,
mit folgenden Verfahrensschritten:
a) In einer Pipettenspitzen-Aufnahmeposition wird an jeder Koppelstelle der Kolbenhubpipette eine Pipettenspitze angekoppelt.
b) Die Kolbenhubpipette wird in eine Flüssigkeits-Aufnahmeposition verfahren.
c) In der Flüssigkeits-Aufnahmeposition werden die Pipettenspitzen mit ihren Ausstoßenden in Flüssigkeit eingetaucht, die sich in mindestens einem Vorratsgefäß befindet, und durch eine von der Steuereinrichtung gesteuerte Bewegung der Kolben der Zylinder-Kolben-Einheiten wird Flüssigkeit in die Pipettenspitzen eingesaugt.
d) Die Kolbenhubpipette wird in eine Ankoppelposition verfahren.
e) In der Ankoppelposition wird die Kolbenhubpipette dergestalt mit der Mikrodosiereinheit gekoppelt, dass jeweils ein Ausstoßende einer Pipettenspitze vor einem Aktuator der Mikrodosiereinheit positioniert ist.
f) In der Ankoppelposition oder in einer Flüssigkeits-Abgabeposition, zu der die Kolbenhubpipette mitsamt der Mikrodosiereinheit verfahren wurde, werden die Aktuatoren ausgehend von der Steuereinrichtung angesteuert und die Ausstoßenden der Pipettenspitzen von den ihnen jeweils zugeordneten Aktuatoren individuell radial verformt, so dass ein Teil der im jeweiligen Ausstoßende befindlichen Flüssigkeit in Tröpfchenform ausgestoßen wird.

Vorliegend geht es um ein Verfahren zum Steuern einer mehrkanaligen Pipettiervorrichtung mit einer Luftpolster-Kolbenhubpipette mit je Kanal einer Zylinder-Kolben-Einheit, einer angeschlossenen Koppelstelle und einer an der Koppelstelle angekoppelten Pipettenspitze.

Grundsätzlich kann eine Pipettiervorrichtung eine einkanalige Luftpolster-Kolbenhubpipette mit einer Koppelstelle und einer einzigen Pipettenspitze aufweisen. Meist handelt es sich jedoch um eine Mehrkanal-Pipettiervorrichtung, bei der also die Pipettiereinheit, insbesondere also die Luftpolster-Kolbenhubpipette, mehrere Koppelstellen und eine entsprechende Anzahl von an diesen Koppelstellen ankoppelbaren Pipettenspitzen aufweist. Eine solche Mehrkanal-Pipettiervorrichtung wird häufig an einem Pipettierautomaten oder Pipettierroboter verwendet.

Der generelle Hintergrund für eine Pipettiervorrichtung der in Rede stehenden Art ergibt sich aus der DE 20 2014 006 241 U1. Deren Inhalt ist für die Lehre der vorliegenden Erfindung als technologischer Hintergrund und für eine Fülle von Details bei der vorliegenden Erfindung von Bedeutung.

Bei einer typischen Pipettiervorrichtung der in Rede stehenden Art wird die Pipettiereinheit, insbesondere also die Luftpolster-Kolbenhubpipette mit ihrem Antrieb, mittels einer Positioniereinrichtung in unterschiedliche Betriebspositionen gebracht. Die Positioniereinrichtung kann eine X/Y/Z-Verfahreinrichtung sein. Es kann sich auch um den Arm eines Roboters handeln, der weitgehend frei im Raum hin und her bewegt werden kann. Hierzu gibt der Stand der Technik diverse Anregungen.

Bei einer Pipettiervorrichtung der in Rede stehenden Art werden die Pipettenspitzen an einer Aufnahmeposition aus einem Spitzenvorrat aufgenommen, also an den Koppelstellen angekoppelt. Dann wird die Pipettiereinheit mittels der Positioniereinrichtung in eine Flüssigkeits-Aufnahmeposition verfahren. Zum Aufnehmen der Flüssigkeit in die Pipettenspitzen werden die Mündungsöffnungen der Pipettenspitzen in die Flüssigkeit in entsprechenden Gefäßen, beispielsweise die Näpfchen einer Mikrotiterplatte, eingetaucht.

Die Flüssigkeitsaufnahme erfolgt durch Wirkung der Verdrängereinheit, insbesondere einer Zylinder-Kolben-Einheit, in der Pipettiereinheit. Nach der Flüssigkeitsaufnahme wird die Pipettiereinheit mittels der Positioniereinrichtung in eine Flüssigkeits-Abgabeposition bewegt. Dort wird, wieder mittels Wirkung der Verdrängereinheit, das gewünschte Flüssigkeitsvolumen aus der jeweiligen Pipettenspitze in ein Zielgefäß abgegeben oder eine restliche Flüssigkeit in den Pipettenspitzen wird ausgestoßen. Im Anschluss an das Abgeben der Restflüssigkeit wird die Pipettiereinheit in eine Pipettenspitzen-Abwurfposition gebracht. Dort werden die Pipettenspitzen mittels einer Spitzenabwurfeinrichtung von den Koppelstellen an der Pipettiereinheit gelöst und in einen Auffangbehälter abgeworfen.

In der DE 20 2014 006 241 U1 geht es um die Abgabe von Volumina aus Pipettenspitzen bis hinunter in den Nanoliterbereich. Eine Pipettenspitze mit einem elastisch verformbaren Röhrchen als Ausstoßende bildet am unteren Ende die Mündungsöffnung der Pipettenspitze. Dieses elastisch verformbare Röhrchen kann durch eine bewegliche Betätigungseinrichtung einer Mikrodosiereinheit so verformt werden, dass gezielt ein definiertes Flüssigkeitsvolumen durch Deformation des Röhrchens knapp oberhalb der Mündungsöffnung der Pipettenspitze als freifliegende Tröpfchen aus der Mündungsöffnung der Pipettenspitze ausgestoßen wird.

Im Stand der Technik der WO 2006/076957 A1 befindet sich die Mikrodosiereinheit der Pipettiervorrichtung ortsfest an der Flüssigkeits-Abgabeposition.

Die Konstruktion bei der DE 20 2014 006 241 U1 zeichnet sich dadurch aus, dass die Mikrodosiereinheit als von der Pipettiereinheit getrennte Einheit ausgeführt ist.

Das bedeutet, dass die Pipettiereinheit in verschiedenen relevanten Betriebspositionen eingesetzt werden kann. Dann wird die Mikrodosiereinheit an der Pipettiereinheit angekoppelt, und zwar in einer genau definierten Relativlage zur Pipettiereinheit, wenn sie gebraucht wird, nämlich in der Flüssigkeits-Abgabeposition. Nach dem Ankoppeln kann die Mikrodosiereinheit gemeinsam mit der Pipettiereinheit mittels der Positioniereinrichtung in unterschiedliche Betriebspositionen gebracht werden, beispielsweise auch in mehrere verschiedene Flüssigkeits-Abgabepositionen.

Aus weiterem Stand der Technik (WO 2013/167594 A1) ist es bei Nutzung einer Pipettenspitze mit einem radial verformbaren Ausstoßende bekannt, den Meniskus der Dosierflüssigkeit im Ausstoßende mittels eines Meniskusdetektors zu erfassen. Bei dem Meniskusdetektor kann es sich um eine Kameraanordnung handeln.

Weiterhin zeigt DE 10 2007 010345 A1 eine Kalibrationsmöglichkeit für eine Pipettiervorrichtung durch Messung der abgegebenen Flüssigkeit durch Beobachtung des Pipettierdrucks und explizit nicht durch optische Beobachtung. DE 10 2012 209314 A1 zeigt eine Kalibrationsmöglichkeit für eine Pipettiervorrichtung mit einer Dosiereinheit durch Messung der abgegebenen Flüssigkeit durch Beobachtung des Pipettierdrucks.

Damit mittels der Wirkung der Verdrängereinheit im jeweiligen Arbeitsdurchgang der Pipettiervorrichtung präzise das gewünschte Flüssigkeitsvolumen aus der jeweiligen Pipettenspitze in ein Zielgefäß abgegeben werden kann, bedarf es der vorherigen Kalibrierung der Pipettiervorrichtung. Das Kalibrieren der Pipettiervorrichtung erfordert, wie der gesamte Betrieb der Pipettiervorrichtung auch, ein Steuern der Pipettiervorrichtung.

Der Erfindung liegt das Problem zugrunde, das Kalibrieren der in Rede stehenden mehrkanaligen Pipettiervorrichtung zu optimieren. Eine dazu passende Optimierung soll auch bei den Arbeitsdurchgängen der Pipettiervorrichtung erfolgen.

Das zuvor aufgezeigte Problem ist bei einem Verfahren mit den Merkmalen des Oberbegriffs von Anspruch 1, wie oben angegeben, durch dessen kennzeichnenden Teil mit gleichen und alternativ kennzeichnenden Merkmalen gelöst. Bevorzugte Ausgestaltungen und Weiterbildungen sind Gegenstand der Ansprüche 2 und 13.

Bei der vorliegenden Erfindung ist das beanspruchte Verfahren weiter gekennzeichnet durch die folgenden weiteren Verfahrensschritte:
g) Individuell je Kanal wird das im Verfahrensschritt f) ausgestoßene Tröpfchen von einer radial zum Ausstoßende der Pipettenspitze ausgerichteten Kamera in deren Bildausschnitt erfasst und die Daten des erfassten Bildes werden der Steuereinrichtung übermittelt.
h) Die Steuereinrichtung ermittelt den Volumenwert des betroffenen Tröpfchens unter Annahme einer Rotationssymmetrie des Tröpfchens.
i) Der im Verfahrensschritt h) ermittelte Volumenwert wird mit einem Volumen-Sollwert verglichen und abhängig von der dabei ermittelten Volumenabweichung wird der dem betroffenen Kanal zugeordnete Aktuator in Richtung auf eine Annäherung an den Volumen-Sollwert verstellt, wobei die Verfahrensschritte f) bis i) für jeden Kanal wiederholt werden.

Die Verstellung in Richtung auf eine Annäherung an den Volumen-Sollwert ist so zu verstehen: Ist der im Verfahrensschritt h) ermittelte Volumenwert kleiner als der Volumen-Sollwert, wird der dem betroffenen Kanal zugeordnete Aktuator so verstellt, dass der Volumenwert des nächsten ausgestoßenen Tröpfchens größer ist als der ermittelte Volumenwert des vorher ausgestoßenen Tröpfchens. Ist der im Verfahrensschritt h) ermittelte Volumenwert größer als der Volumen-Sollwert, wird der dem betroffenen Kanal zugeordnete Aktuator so verstellt, dass der Volumenwert des nächsten ausgestoßenen Tröpfchens kleiner ist als der ermittelte Volumenwert des vorher ausgestoßenen Tröpfchens. Das Ausmaß der Verstellung ist in beiden Fällen abhängig von der ermittelten Volumenabweichung. Entspricht der im Verfahrensschritt h) ermittelte Volumenwert dem Volumen-Sollwert, einschließlich eines vorgegebenen Toleranzbereichs, wird der dem betroffenen Kanal zugeordnete Aktuator nicht verstellt.

Jeder Kanal mit der jeweils angekoppelten individuellen Pipettenspitze kann einer unterschiedlichen Einstellung des Aktuators bedürfen. Auch unterschiedliche Flüssigkeiten benötigen eine spezifische Einstellung. Bei diesen erfindungsgemäßen Verfahrensschritten werden alle Kanäle der Pipettiervorrichtung kalibriert. Jeder Kanal wird in separaten Verfahrensschritten einzeln kalibriert, gefolgt von einem Verfahrensschritt die Zylinder-Kolben-Einheit betreffend, wobei die Kalibrierung der mehrkanaligen Pipettiervorrichtung optimiert wird.

Bei der vorliegenden Erfindung ist das beanspruchte Verfahren weiter gekennzeichnet durch die folgenden weiteren Verfahrensschritte:
j1) Bei der Wiederholung der Verfahrensschritte f) bis i) werden die für den Kanal nacheinander ermittelten Volumenwerte kumuliert und der kumulierte Volumenwert wird mit einem in der Steuereinrichtung vorgegebenen Sequenzvolumenwert verglichen.
k1) Die Wiederholungen gemäß Verfahrensschritt j1) werden bei den Kanälen beendet, deren kumulierter Volumenwert sich dem Sequenzvolumenwert bis auf ein Differenzvolumen angenähert hat, das geringer ist als der letzte ermittelte Volumenwert, oder den Sequenzvolumenwert erreicht oder erstmals überschritten hat.
I1) Nach Verfahrensschritt k1) wird für den betroffenen Kanal der Kolben der betroffenen Zylinder-Kolben-Einheit, angesteuert von der Steuereinrichtung, so verfahren, dass das Luftvolumen der Dosierkammer verringert und so der Flüssigkeitsverlust aus der Pipettenspitze im Umfange des kumulierten Volumenwertes oder des Sequenzvolumenwertes im Ausstoßende neutralisiert wird.
m1) die Verfahrensschritte f) bis I1) werden wiederholt, bis der ermittelte Volumenwert in jedem Kanal innerhalb eines vorgegebenen Toleranzbereiches um den Volumen-Sollwert liegt oder längstens bis alle kumulierten Volumenwerte aus dem Verfahrensschritt j1) dem in Verfahrensschritt c) aufgesaugten Flüssigkeitsvolumen abzüglich eines Restvolumens entsprechen.

Im Verfahrensschritt k1) werden mit anderen Worten die Wiederholungen gemäß Verfahrensschritt j1) bei den Kanälen beendet, deren kumulierter Volumenwert
- einen Schwellwert erreicht oder erstmals überschritten hat, der um ein Differenzvolumen, das geringer ist als der letzte ermittelte Volumenwert, kleiner ist als der Sequenzvolumenwert oder
- den Sequenzvolumenwert erreicht oder
- den Sequenzvolumenwert erstmals überschritten hat.

Dieses Verfahren ermöglicht bei einer mehrkanaligen Pipettiervorrichtung eine Kalibrierung der einzeln abgegebenen Flüssigkeitsvolumen in Tröpfchenform auf einen Volumen-Sollwert innerhalb eines vorgegebenen Toleranzbereiches mit einer unterschiedlichen Anzahl von benötigten Wiederholungen der einzelnen Kanäle.

In einem bevorzugten Verfahrensschritt n1) liegt der im Verfahrensschritt i) zuletzt ermittelte Volumenwert in jedem Kanal innerhalb eines vorgegebenen Toleranzbereiches um den Volumen-Sollwert. Hier werden nach dem Verfahrensschritt I1) mit der zuvor erreichten Einstellung der Aktuatoren aus den Pipettenspitzen der Kanäle, gesteuert von der Steuereinrichtung, Tröpfchen in zugeordnete Zielgefäße abgegeben, und zwar in der Ankoppelposition oder in einer zuvor von der Kolbenhubpipette mitsamt der Mikrodosiereinheit angefahrenen Flüssigkeits-Abgabeposition.

In dem bevorzugten Verfahrensschritt n1) ist es vorteilhaft, wenn die Abgabe von Tröpfchen bei Annähern an den Sequenzvolumenwert entsprechend Verfahrensschritt k1) unterbrochen und der Flüssigkeitsverlust durch den Verfahrensschritt I1) neutralisiert wird. Mit diesen Verfahrensschritten wird eine Flüssigkeitsabgabe in einem anderen Zielgefäß oder an einem anderen Ort definiert. Die bei der Kalibrierung vorgegebene Bedingung im Verfahrensschritt I1) wird für eine genaue Volumenabgabe weiter gefordert.

Die Bedingung "bei Annähern an den Sequenzvolumenwert entsprechend Verfahrensschritt k1)" ist erfüllt, sobald der kumulierte Volumenwert des jeweiligen Kanals einen Schwellwert erreicht oder überschritten hat, der um ein Differenzvolumen, das geringer ist als der letzte ermittelte Volumenwert, kleiner ist als der Sequenzvolumenwert.

Bei der vorliegenden Erfindung ist das beanspruchte Verfahren alternativ zu den Verfahrensschritten j1) bis m1) durch die folgenden weiteren Verfahrensschritte weiter gekennzeichnet:
j4) Die Verfahrensschritte f) bis i) werden für jeden Kanal so lange wiederholt, bis der Volumenwert im jeweiligen Kanal innerhalb eines vorgegebenen Toleranzbereiches um den Volumen-Sollwert liegt.
k4) Je Kanal werden die nacheinander ermittelten Volumenwerte kumuliert.
I4) Die kumulierten Volumenwerte der Kanäle werden verglichen.
m4) Der höchste kumulierte Volumenwert aller Kanäle wird ermittelt.
n4) Verfahrensschritt f) oder die Verfahrensschritte f) bis i) werden außer bei dem Kanal mit dem höchsten kumulierten Volumenwert bei den anderen Kanälen so lange wiederholt, bis im jeweiligen Kanal der kumulierte Volumenwert dem höchsten kumulierten Volumenwert bis auf ein Differenzvolumen entspricht, das geringer ist als der letzte ermittelte Volumenwert des Kanals.
o4) Nach dem Verfahrensschritt n4) wird jeder Kolben der Zylinder-Kolben-Einheit, angesteuert von der Steuereinrichtung, in Abgaberichtung so verfahren, dass das Luftvolumen der Dosierkammer verringert und so der Flüssigkeitsverlust aus der Pipettenspitze im Umfange des je Kanal kumulierten Volumenwertes, des höchsten kumulierten Volumenwertes oder des Mittelwerts aller kumulierten Volumenwerte im Ausstoßende neutralisiert wird.

Bei diesem alternativ ausgestalteten erfindungsgemäßen Verfahren wird die gleiche vorteilhafte Wirkung erzielt, wie zuvor beschrieben. Bei speziellen Bedingungen, insbesondere einem ungünstigen Verhältnis von sehr geringem Tröpfchenvolumen zu einem noch möglichen Bewegen bzw. Verfahren bzw. Verfahrensschritt des Kolbens oder bei einer größeren zulässigen Volumenabweichung lässt sich mit diesen Verfahrensschritten die benötigte Zeit zum Kalibrieren der Kanäle verkürzen.

In einem bevorzugten Verfahrensschritt p4) nach dem Verfahrensschritt I4) werden mit der zuvor erreichten Einstellung der Aktuatoren aus den Pipettenspitzen der Kanäle, gesteuert von der Steuereinrichtung, Tröpfchen in zugeordnete Zielgefäße abgegeben, und zwar in der Ankoppelposition oder in einer zuvor von der Kolbenhubpipette mitsamt der Mikrodosiereinheit angefahrenen Flüssigkeits-Abgabeposition.

In dem bevorzugten Verfahrensschritt p4) ist es vorteilhaft, dass die Abgabe von Tröpfchen in der Flüssigkeits-Abgabeposition bei Annähern an den höchsten kumulierten Volumenwert entsprechend Verfahrensschritt m4) oder an einen vorgegebenen Sequenzvolumenwert unterbrochen wird und der Flüssigkeitsverlust durch den Verfahrensschritt o4) neutralisiert wird. Mit diesen Verfahrensschritten wird eine Flüssigkeitsabgabe in einem anderen Zielgefäß oder an einem anderen Ort definiert. Die bei der Kalibrierung vorgegebene Bedingung im Verfahrensschritt o4) wird für eine genaue Volumenabgabe weiter gefordert.

Die Bedingung "bei Annähern an den höchsten kumulierten Volumenwert entsprechend Verfahrensschritt m4) oder an einen vorgegebenen Sequenzvolumenwert" ist erfüllt, sobald der kumulierte Volumenwert des jeweiligen Kanals einen Schwellwert erreicht oder überschritten hat, der um ein Differenzvolumen, das geringer ist als der letzte ermittelte Volumenwert, kleiner ist als der höchste kumulierte Volumenwert oder der vorgegebene Sequenzvolumenwert.

Von Vorteil ist es, wenn der Verfahrensschritt I1) bzw. o4) für alle Zylinder-Kolben-Einheiten gleichzeitig durchgeführt wird. Die gleichzeitige Durchführung spart Zeit, besonders mittels eines für alle Kolben gemeinsamen Antriebes.

Bei der vorliegenden Erfindung ist das beanspruchte Verfahren alternativ zu den Verfahrensschritten j1) bis m1) bzw. j4) bis o4) durch die folgenden weiteren Verfahrensschritte weiter gekennzeichnet:
j8) Die Verfahrensschritte f) bis i) werden für jeden Kanal so lange wiederholt, bis der Volumenwert im jeweiligen Kanal innerhalb eines vorgegebenen Toleranzbereiches um den Volumen-Sollwert liegt.
k8) Je Kanal werden die nacheinander ermittelten Volumenwerte kumuliert und der kumulierte Volumenwert wird mit einem in der Steuereinrichtung vorgegebenen maximalen Volumenwert verglichen.
I8) Die Wiederholungen gemäß Verfahrensschritt j8) werden für den jeweiligen Kanal beendet, sobald der kumulierte Volumenwert dem maximalen Volumenwert bis auf ein Differenzvolumen entspricht, das geringer ist als der letzte bei diesem Kanal ermittelte Volumenwert.
m8) Nach Verfahrensschritt I8) für alle Kanäle wird die Restflüssigkeit mittels der Zylinder-Kolben-Einheiten aus allen Pipettenspitzen ausgestoßen und der Prozess ab Verfahrensschritt b) neu gestartet oder eine Eingabe vom Anwender gefordert.

Bei diesem alternativ ausgestalteten erfindungsgemäßen Verfahren wird die gleiche vorteilhafte Wirkung erzielt, wie zuvor beschrieben. Bei speziellen Bedingungen, wie größer eingestellte Tropfenvolumen kann das maximale zur Verfügung stehende Nennvolumen der Pipettenspitze begrenzt sein. Unter dieser möglichen Bedingung ist die vorliegende Lehre von Vorteil.

In dem bevorzugten Verfahrensschritt n8) ist es vorteilhaft, wenn der im Verfahrensschritt j8) zuletzt ermittelte Volumenwert in jedem Kanal innerhalb eines vorgegebenen Toleranzbereiches um den Volumen-Sollwert liegt, so werden nach dem Verfahrensschritt I8) mit der zuvor erreichten Einstellung der Aktuatoren aus den Pipettenspitzen der Kanäle, gesteuert von der Steuereinrichtung, Tröpfchen in zugeordnete Zielgefäße abgegeben, und zwar in der Ankoppelposition oder in einer zuvor von der Kolbenhubpipette mitsamt der Mikrodosiereinheit angefahrenen Flüssigkeits-Abgabeposition.

In dem bevorzugten Verfahrensschritt n8) ist es vorteilhaft, wenn die Abgabe von Tröpfchen in der Flüssigkeits-Abgabeposition bei Annähern an den maximalen Volumenwert entsprechend Verfahrensschritt I8) oder einem vorgegebenen Sequenzvolumenwert unterbrochen wird und der Flüssigkeitsverlust durch einen analog zu dem Verfahrensschritt o4) durchgeführten Verfahrensschritt neutralisiert wird.

Die Bedingung "bei Annähern an den maximalen Volumenwert entsprechend Verfahrensschritt I8) oder an einen vorgegebenen Sequenzvolumenwert" ist erfüllt, sobald der kumulierte Volumenwert einen Schwellwert erreicht oder überschritten hat, der um ein Differenzvolumen, das geringer ist als der letzte ermittelte Volumenwert, kleiner ist als der maximale Volumenwert oder der vorgegebene Sequenzvolumenwert.

Mit diesen Verfahrensschritten wird eine Flüssigkeitsabgabe in einem anderen Zielgefäß oder an einem anderen Ort definiert. Die bei der Kalibrierung vorgegebene individuell ermittelte Bedingung im Verfahrensschritt o4), der Neutralisation des Flüssigkeitsverlustes aus der Pipettenspitze im Umfange des je Kanal kumulierten Volumenwertes, des höchsten kumulierten Volumenwertes oder des Mittelwerts aller kumulierten Volumenwerte im Ausstoßende, wird für eine genaue Volumenabgabe weiter gefordert.

Bei den erfindungsgemäßen Verfahrensschritten gelten die bevorzugten Ausgestaltungen und Weiterbildungen, die optional realisiert werden können.

Besonders zweckmäßig ist eine Ausgestaltung, bei der die Einstellung des Volumenwertes beendet wird, wenn eine vom Anwender vorgegebene Anzahl von Wiederholungen der Verfahrensschritte f) bis i) erreicht worden ist. Alternativ bietet es sich an, dass abhängig vom Ergebnis des Vergleichs im Verfahrensschritt i) die Verfahrensschritte f) bis l1) bzw. f) bis o4) bzw. f) bis m8) wiederholt werden bis zu einem Abschaltereignis oder -zeitpunkt, wobei dann vorzugsweise eine Benutzereingabe gefordert wird. Indem der Anwender Abschaltbedingungen vorgibt, wird der Kalibriervorgang gezielt begrenzbar. Vorzugsweise empfiehlt es sich, nach der Unterbrechung eine den weiteren Ablauf leitende Benutzereingabe einzufordern.

Optional kann man vorsehen, dass die Verfahrensschritte j1) und k1) bzw. j4) bis n4) bzw. j8) bis l8) für die Kanäle der Kolbenhubpipette nicht gleichzeitig durchgeführt werden, sondern in einer bestimmten Reihenfolge nacheinander und/oder für benachbarte Kanäle nicht gleichzeitig und insgesamt bis diese Verfahrensschritte für alle Kanäle abgeschlossen worden sind. Damit werden gleichmäßige Lichtverhältnisse gewährleistet.

Das erfindungsgemäße Verfahren ist noch zielgerichteter, wenn nach einem Wechsel der Flüssigkeit und/oder nach einem Wechsel der Pipettenspitzen die Steuereinrichtung im Verfahrensschritt g) verschiedene Einstellungen vergleicht. Auch empfiehlt es sich, den Zeitpunkt der Ansteuerung des Aktuators und/oder einer Stroboskopleuchte und/oder eine Bildabfrage im Sinne einer optimalen Darstellung und zentralen Position des zu erfassenden Tröpfchens im Bildausschnitt der Kamera dabei anzupassen.

Was die Bestimmung des Differenzvolumens betrifft, das für die Beendigung der Wiederholungen von Bedeutung ist (Verfahrensschritte k1), n4), I8)), so ist zu berücksichtigen, dass in dem Ausstoßende ein Flüssigkeits-Restvolumen enthalten sein muss, das überhaupt erst die Tröpfchenabgabe durch Impulse des Aktuators erlaubt.

Bei dem erfindungsgemäßen Verfahren kann der Aktuator von der Steuereinrichtung passend angesteuert werden. Dazu kann es sich empfehlen, dass die Steuereinrichtung im Verfahrensschritt i) zur Verformung des Ausstoßendes den Zeitpunkt der Verformung in Bezug zur Bilderfassung im Verfahrensschritt g), den Hubweg, die jeweilige Verweilzeit beim Wechsel der Hubrichtung, den Vorspannweg und/oder die Vorspannkraft der Verformung des Ausstoßendes, am Ausstoßende den Abstand zwischen Verformung und Ausstoßöffnung, den Winkel zwischen Ausstoßende und Aktuator und/oder die Dynamik des jeweiligen Aktuators einstellt.

Bei den dynamischen Einstellmöglichkeiten bieten die Vorwärts-Beschleunigung, Vorwärts-Geschwindigkeit, Rückzugs-Beschleunigung und/oder Rückzugs-Geschwindigkeit des jeweiligen Aktuators in Abhängigkeit von der im Verfahrensschritt i) ermittelten Volumenabweichung und/oder von der Kontur oder der Position des Tröpfchens sinnvolle Möglichkeiten.

Hinsichtlich der Grenzbedingungen bei der Anwendung des Verfahrens wird der Anwender vor dem Verfahrensschritt i) der Steuereinrichtung Eingabewerte vorgeben. Die Werte umfassen den Toleranzbereich des Volumen-Sollwertes, den Sequenzvolumenwert, das Restvolumen, die Dosierflüssigkeit, Daten zu der Dosierflüssigkeit, die Parameter des einstellbaren Aktuators und/oder Daten oder Algorithmen zur Verstellung des Aktuators durch die Steuereinrichtung. Der Aktuator wird bevorzugt nur dann von der Steuereinrichtung verstellt, wenn die Volumenabweichung größer als der Toleranzbereich ist. Zusätzlich oder alternativ wird der Aktuator unter Berücksichtigung der Annäherung der Volumenabweichung an den Toleranzbereich gegenüber einem vorherigen Verfahrensschritt i) verändert, also nicht gleichförmig verstellt.

Das erfindungsgemäße Verfahren ist zielgerichteter anwendbar, wenn vor einem Wiederholen des Verfahrensschrittes j1) bzw. j4) bzw. j8) je Kanal die Differenz zwischen einem Sequenzvolumenwert und einem vorherigen kumulierten Volumenwert ermittelt wird und die Differenz im nächsten Verfahrensschritt j1) bzw. j4) bzw. j8) als ein Volumenwert, wie im Verfahrensschritt h) ermittelt, kumuliert wird. Die vorherigen Abweichungen werden in der Wiederholung somit berücksichtigt.

Das erfindungsgemäße Verfahren bietet besonders im Verfahrensschritt e) die Möglichkeit, dass nach Erreichen der Ankoppelposition das Ausstoßende vertikal ausgerichtet und der zugeordnete Aktuator der Mikrodosiereinheit orthogonal dazu beweglich ist und radial, vorzugsweise rechtwinklig, mit dem Ausstoßende der Pipettenspitze in Wechselwirkung tritt.

Hinsichtlich der Kamera empfiehlt es sich, dass im Verfahrensschritt g) der Bildausschnitt als Einzelbild oder als ein Einzelbild aus einem Strom an Einzelbildern selektiert erfasst wird.

Auch ist von Vorteil, wenn im Verfahrensschritt g) eine gegenüber zur Kamera angeordnete Beleuchtungseinrichtung, die den Bildausschnitt ausleuchtet, das Erfassen des Bildes im Bildausschnitt unterstützt.

Ferner empfiehlt es sich, dass der im Verfahrensschritt h) durch die Steuereinrichtung ermittelte Volumenwert des betroffenen Tröpfchens durch Vergleich des im Verfahrensschritt g) erfassten Bildes mit einem gespeicherten Referenzbild ermittelt und/oder aus den Daten des im Verfahrensschritt g) erfassten Bildes die Kontur des Tröpfchens berechnet wird, insbesondere dass die Steuereinrichtung den Volumenwert des betroffenen Tröpfchens aus dem Volumenwert des Tröpfchens des als passend festgestellten Referenzbildes, aus der errechneten Kontur des Tröpfchens unter Annahme einer Rotationssymmetrie des Tröpfchens oder aus beidem ermittelt.

Hinsichtlich des Antriebes für den Kolben empfiehlt es sich, dass der Sequenzvolumenwert oder der höchste kumulierte Volumenwert dem kleinstmöglichen Hub der Zylinder-Kolben-Einheit entspricht. Dieser Wert liegt zwischen 10 und 2000 nl, insbesondere zwischen 25 und 500 nl optimal.

Im Folgenden wird die Erfindung anhand der nachfolgenden Zeichnung näher erläutert. Fig. 1, 2 und 6 bis 9 der Zeichnung sind der DE 20 2014 006 241 U1 ähnlich. Sie beziehen sich also auf den Stand der Technik, der den Ausgangspunkt für die Lehre der vorliegenden Erfindung bildet. Sie vermitteln aber auch eine Fülle von Merkmalen, die im Rahmen der vorliegenden Erfindung zweckmäßig verwirklicht werden können.

In der Zeichnung zeigt
- Fig. 1: in schematischer Darstellung die Pipettiervorrichtung ohne Mikrodosiereinheit in einer Pipettenspitzen-Aufnahmeposition,
- Fig. 2: in schematischer Darstellung die Pipettiervorrichtung ohne Mikrodosiereinheit in einer Flüssigkeits-Aufnahmeposition,
- Fig. 3: in schematischer Darstellung die Pipettiervorrichtung aus Fig. 2 mit einer Mikrodosiereinheit vor einer Ankoppelposition,
- Fig. 4a: in schematischer Darstellung die Pipettiervorrichtung aus Fig. 3 mit einer Mikrodosiereinheit in einer Ankoppelposition,
- Fig. 4b: Pipettiervorrichtung aus Fig. 4a in der Ankoppelposition nach vollständigem Ankoppeln,
- Fig. 5a: in schematischer Darstellung eine Pipettiervorrichtung und eine Mikrodosiereinheit in einer Ankoppelposition während des Kalibrierens der Mikrodosiereinheit, hier die Flüssigkeitsabgabe,
- Fig. 5b: in schematischer Darstellung eine Pipettiervorrichtung und eine Mikrodosiereinheit in einer Ankoppelposition während des Kalibrierens der Mikrodosiereinheit, hier das Nachführen des Kolbens,
- Fig. 6: in schematischer Darstellung eine Pipettiervorrichtung und eine eine Flüssigkeit in Zielgefäße dosierende Mikrodosiereinheit,
- Fig. 7: in schematischer Darstellung die Pipettiervorrichtung aus Fig. 2 bei der abschließenden Flüssigkeits-Abgabe,
- Fig. 8: in schematischer Darstellung die Pipettiervorrichtung aus Fig. 1 in einer Pipettenspitzen-Abwurfposition,
- Fig. 9: eine Pipettiervorrichtung mit acht parallel angeordneten Pipettenspitzen und einer Achtfach-Mikrodosiereinheit in schematischer Darstellung,

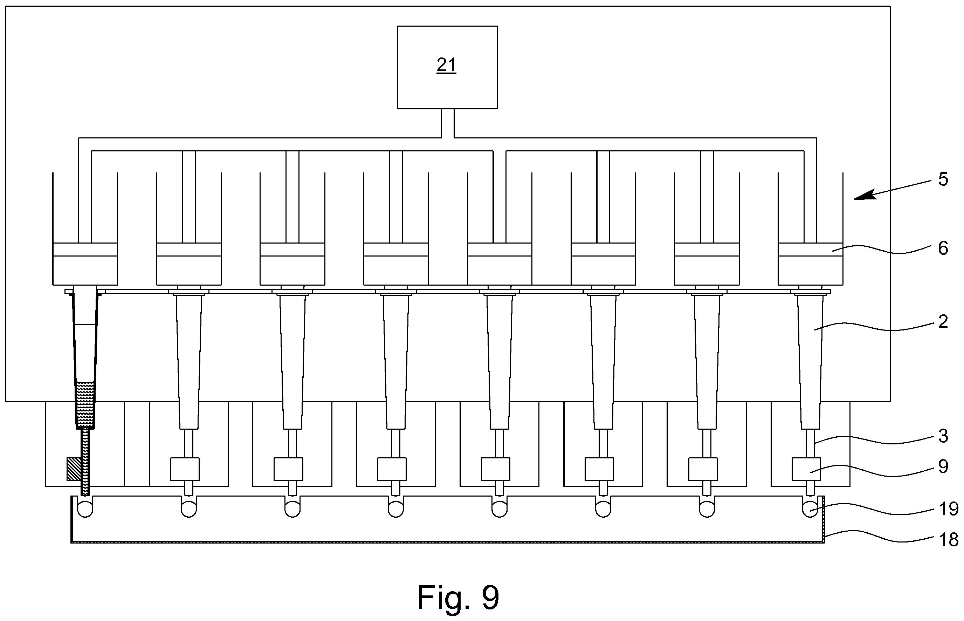

Zunächst wird das Grundkonzept einer Pipettiervorrichtung der in Rede stehenden Art gemäß der DE 20 2014 006 241 U1 erläutert, das gleichfalls das Grundkonzept einer Pipettiervorrichtung gemäß der vorliegenden Erfindung ist. Allerdings darf vorausgeschickt werden, dass die vorliegende Erfindung sich bevorzugt auf eine mehrkanalige Pipettiervorrichtung mit Luftpolster-Kolbenhubpipette bezieht, so dass besonders einschlägig Fig. 9 der Darstellung zu diesem Stand der Technik ist.

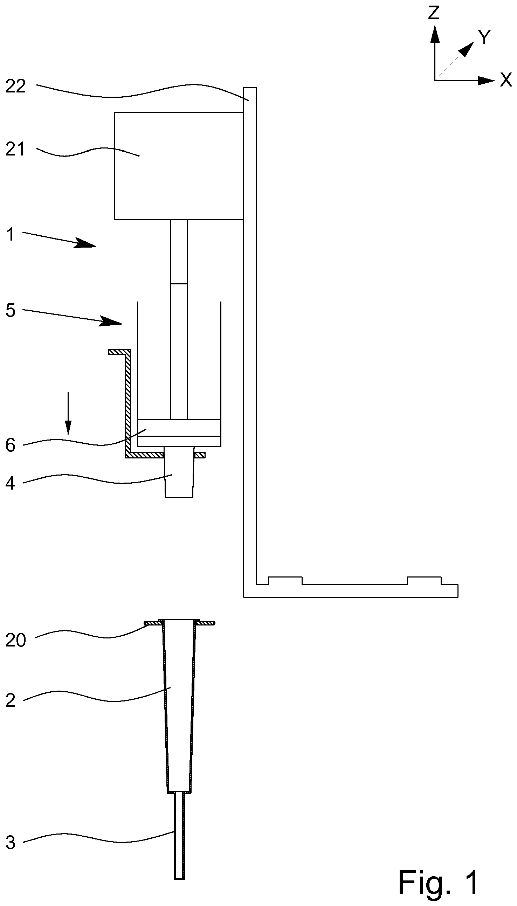

Fig. 1 zeigt eine Pipettiervorrichtung mit einer Luftpolster-Kolbenhubpipette 1, nachfolgend Kolbenhubpipette genannt. An der Kolbenhubpipette 1 ist mindestens eine Pipettenspitze 2 auswechselbar anbringbar. Die Pipettiervorrichtung ist eine solche mit einer Pipettenspitze 2, die ein elastisch verformbares Ausstoßende 3 aufweist. Das elastisch verformbare Ausstoßende 3 hat im dargestellten Ausführungsbeispiel die Gestalt eines elastisch verformbaren Röhrchens. Ein solches Röhrchen kann einen beliebigen Querschnitt aufweisen, beispielsweise auch einen ellipsenförmigen Querschnitt. Hier sind alle Varianten möglich.

Wie Fig. 1 zeigt, hat die Kolbenhubpipette 1 für jede anbringbare Pipettenspitze 2 eine als Pipettenschaft ausgebildete Koppelstelle 4, auf die das offene obere Ende der Pipettenspitze 2 aufgesteckt wird, um diese anzukoppeln. Die Kolbenhubpipette 1 weist mindestens einen Kanal mit der Koppelstelle 4 und einer damit strömungstechnisch verbundenen Verdrängereinheit 5 auf. Bei der Verdrängereinheit 5 handelt es sich hier um eine Zylinder-Kolben-Einheit.

Die Verdrängereinheit 5 weist einen Kolben 6 auf, der je nach der Richtung, in der er angetrieben wird, in der angekoppelten Pipettenspitze 2 einen Unterdruck zum Aufnehmen von Flüssigkeit in die Pipettenspitze 2 oder einen Überdruck zum Ausstoßen von Flüssigkeit aus der Pipettenspitze 2 erzeugt.

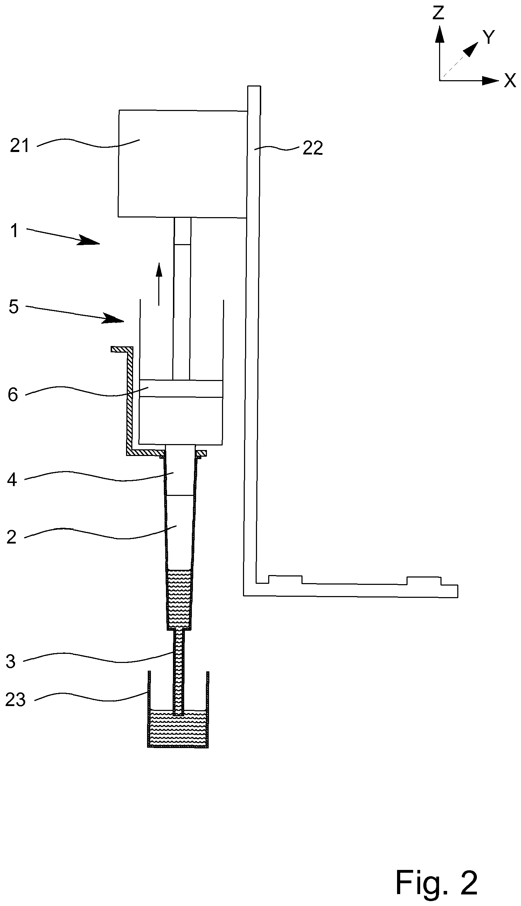

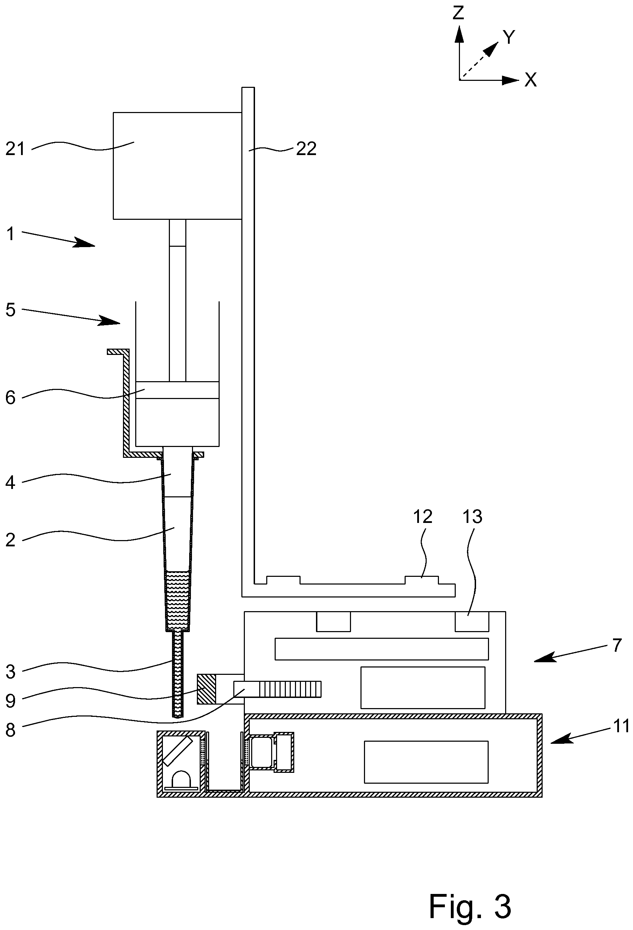

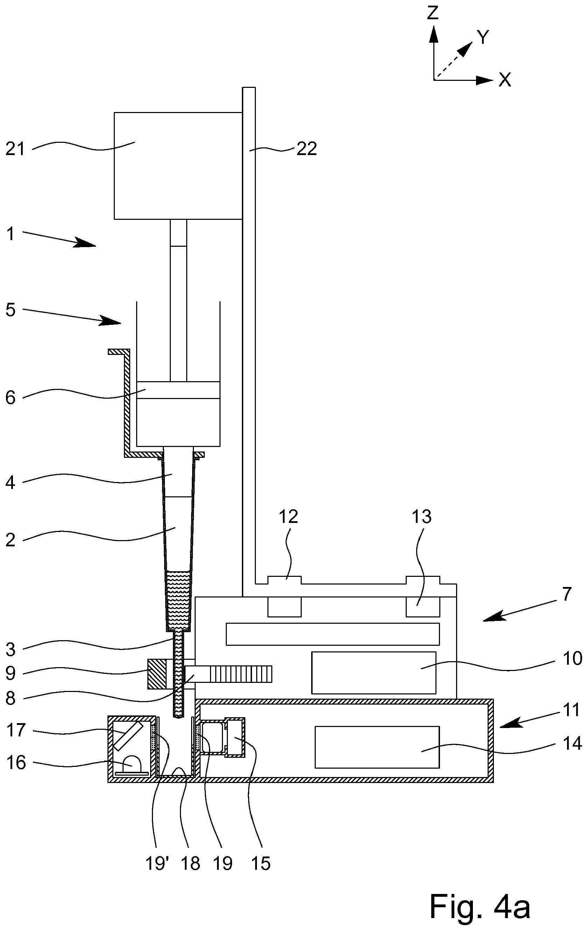

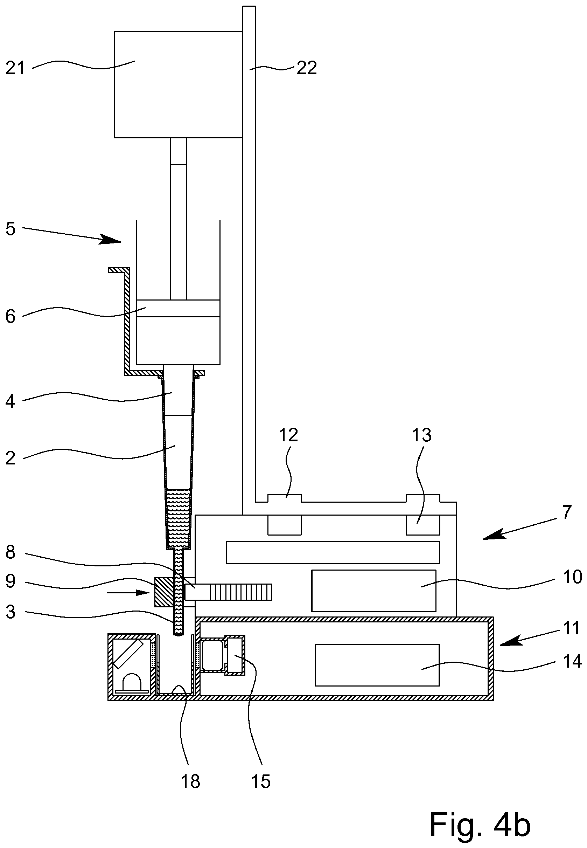

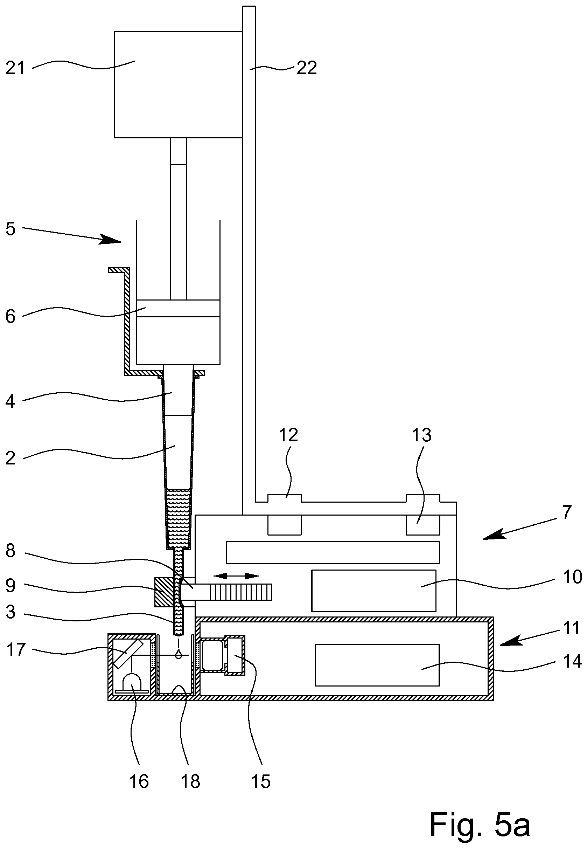

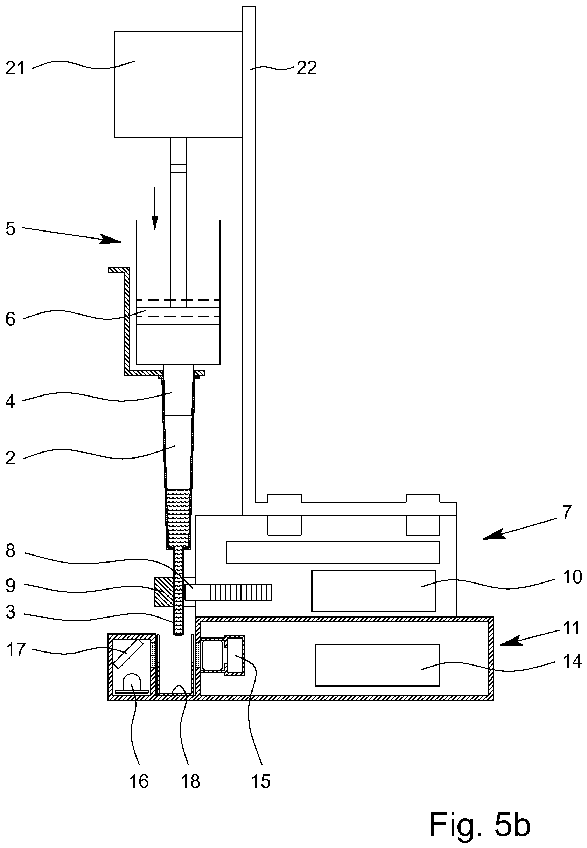

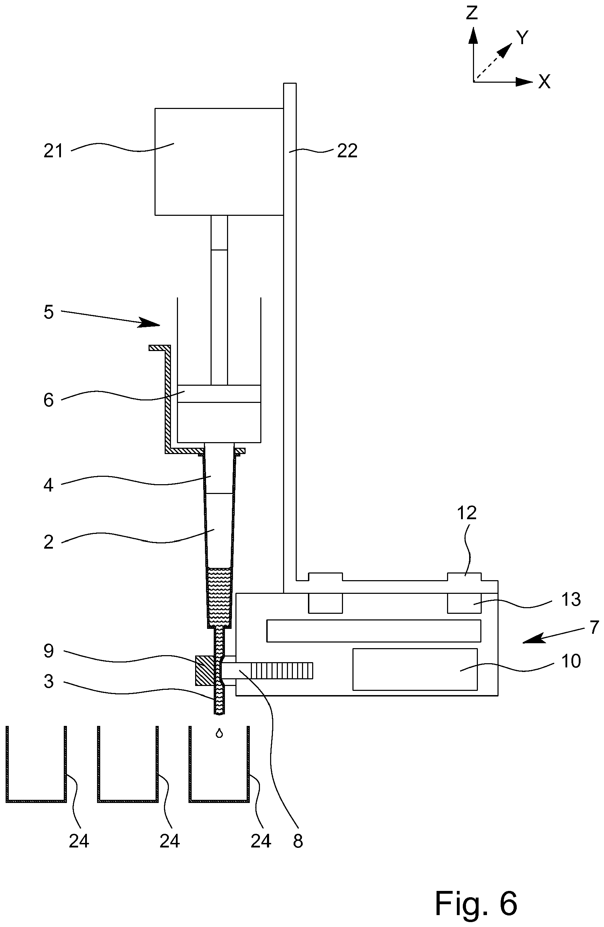

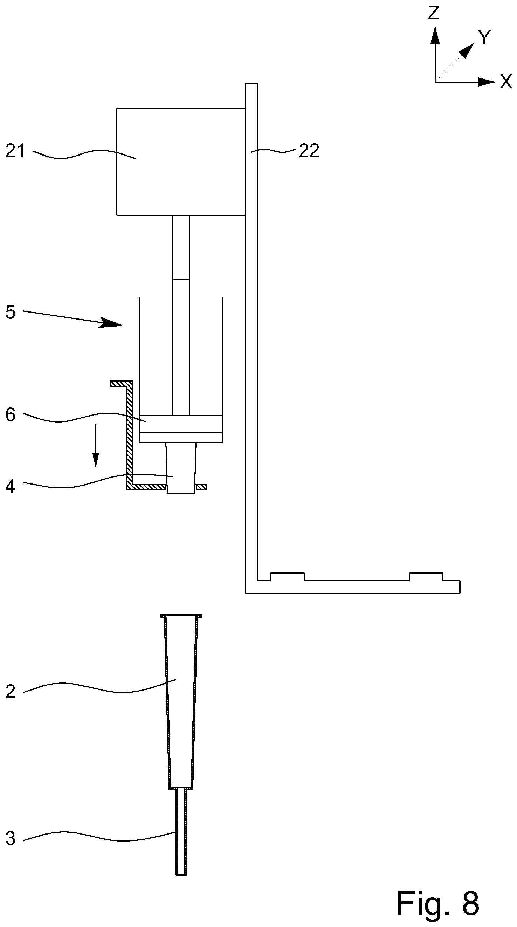

Mittels einer nicht dargestellten Positioniereinrichtung, gesteuert von einer ebenso nicht gezeigten Steuereinrichtung der Pipettiervorrichtung, ist die Kolbenhubpipette 1 in unterschiedliche Betriebspositionen bringbar. Typische Betriebspositionen sind eine Pipettenspitzen-Aufnahmeposition (Fig. 1), eine Flüssigkeits-Aufnahmeposition (Fig. 2), eine Ankoppelposition (Fig. 3, 4a und 4b), in der auch eine Kalibrierung vorgenommen wird (Fig. 5a und 5b), eine Flüssigkeits-Abgabeposition oder eine Mehrzahl solcher Flüssigkeits-Abgabepositionen (Fig. 6), sowie eine Pipettenspitzen-Abwurfposition (Fig. 8).

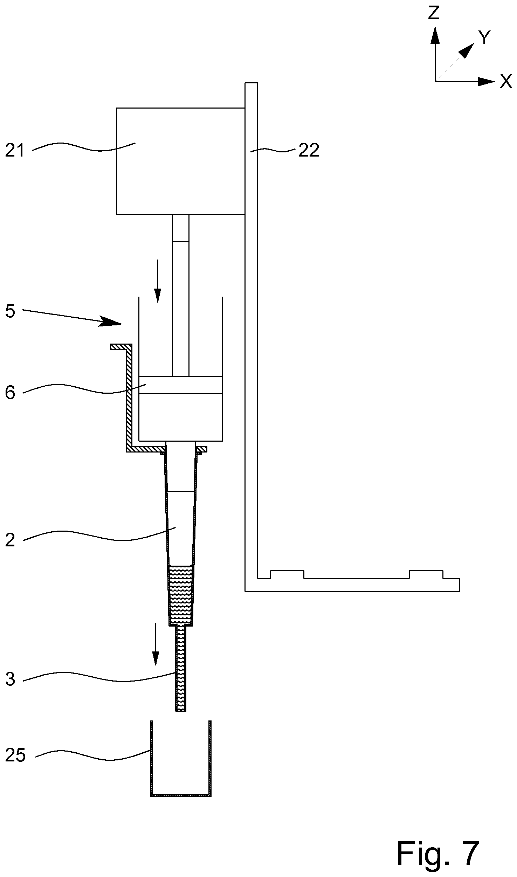

Dazwischen kann auch noch eine Restflüssigkeits-Ausstoßposition liegen, wie in Fig. 7 dargestellt. In der Restflüssigkeits-Ausstoßposition der Kolbenhubpipette 1 kann Restflüssigkeit aus den Pipettenspitzen 2 entfernt werden, bevor diese dann in der Pipettenspitzen-Abwurfposition (Fig. 8) in einen Behälter abgeworfen werden.

Die Kolbenhubpipette 1 wird, wie Fig. 3, 4a, 4b zeigen, an einer Mikrodosiereinheit 7 angekoppelt. Die Mikrodosiereinheit 7 umfasst einen Aktuator 8, der mit dem elastisch verformbaren Ausstoßende 3 der Pipettenspitze 2 in Kraft übertragenden Eingriff kommen kann. Zur Fixierung des Ausstoßendes 3 der Pipettenspitze 2 dient ein Widerlager 9. Dieses ist mittels eines Antriebs an das Ausstoßende 3 der Pipettenspitze 2 anstellbar (siehe Fig. 4a im Übergang zu Fig. 4b). Mittels des Aktuators 8 kann detektiert werden, mit welcher Vorspannkraft und/oder über welchen Vorspannweg das Widerlager 9 gegen das Ausstoßende 3 der Pipettenspitze 2 verfahren wird. Im dargestellten Ausführungsbeispiel tritt der Aktuator 8 mit dem elastisch verformbaren Ausstoßende 3 der Pipettenspitze 2, dem im Ausführungsbeispiel verwirklichten elastisch verformbaren Röhrchen, unmittelbar oberhalb der Mündungsöffnung in Wechselwirkung.

Die in Fig. 5 dargestellte Mikrodosiereinheit 7 wird hier von einer eigenen Steuereinheit 10 angesteuert. Das Widerlager 9 und der Aktuator 8 sind elektrisch mit der Steuereinheit 10 verbunden und jeweils in mindestens einem Parameter einstellbar.

In Fig. 3, 4a 4b und 5a erkennt man, dass nach besonders bevorzugter Gestaltung die Pipettiervorrichtung eine Basisstation 11 zur Ablage der Mikrodosiereinheit 7 bei Nichtgebrauch hat. Die Basisstation 11 bietet einen bewusst vorgesehenen, definierten Platz zur Ablage der Mikrodosiereinheit 7 bei Nichtgebrauch. Sie ist vorzugsweise an der Pipettiervorrichtung ortsfest positioniert.

In Fig. 4a bis Fig. 5b ist jeweils eine übereinander gestapelte Anordnung von Kolbenhubpipette 1, Mikrodosiereinheit 7 und Basisstation 11 gezeigt. Die Kolbenhubpipette 1 ist mit der Mikrodosiereinheit 7 über eine Ankopplungseinrichtung 12 und eine Gegenkopplungseinrichtung 13 verbunden. Diese Einrichtungen sind in horizontaler Ebene orientiert. Die Ablage der Mikrodosiereinheit 7 auf der Basisstation 11 ist auch in horizontaler Ebene orientiert. Eine andere Anordnung in vertikaler oder geneigter Ebene ist ebenso möglich. Einzelheiten zu diesen Konstruktionen finden sich in der DE 20 2014 006 241 U1, auf die hier ausdrücklich verwiesen wird.

Die Basisstation 11 hat im Weiteren einen nicht dargestellten Anschluss für die Stromversorgung und für Datenleitungen, die mit der Steuereinrichtung der Pipettiervorrichtung verbunden sind. Im Weiteren weist die Basisstation 11 auf eine Steuereinrichtung 14, eine Kamera 15 und eine Beleuchtung 16, die elektrisch verbunden sind. Daneben umfasst die Basisstation 11 einen Spiegel 17 und das Auffanggefäß 18. Vor dem Spiegel 17 und der Kamera 15 können Fenster 19, 19' angeordnet sein. Es kann eine weitere Datenleitung zur Mikrodosiereinheit 7 eingerichtet sein, über die Signale von der Kamera 15 und/oder der Steuereinrichtung 14 weitergeleitet werden.

Zur steuerungstechnischen Organisation der Pipettiervorrichtung kann man vorsehen, dass die Mikrodosiereinheit 7 weitgehend steuerungstechnisch autark ist, wobei sie kontaktgebunden oder drahtlos mit der Steuereinrichtung der Pipettiervorrichtung und der Steuereinrichtung 14 der Basisstation 11 kommuniziert. Ebenso kann die Basisstation 11 weitgehend steuerungstechnisch autark und mit der Steuereinrichtung der Pipettiervorrichtung kontaktverbunden sein.

Das erfindungsgemäße Verfahren umfasst nachfolgend erläuterte Verfahrensschritte.

In Fig. 1 sieht man die Situation in der Pipettenspitzen-Aufnahmeposition. Die Pipettenspitze 2 befindet sich eingehängt im Traggestell 20 eines Vorratsbehälters. Die Verdrängereinheit 5 in Form einer Zylinder-Kolben-Einheit befindet sich mitsamt einem dazu gehörenden Antrieb 21 an einer Halterung 22. Der Antrieb 21 ist mit einer nicht dargestellten Steuereinrichtung der Pipettiervorrichtung verbunden.

Durch Pfeile ist angedeutet, wie die hier dargestellte Kolbenhubpipette 1 mittels der nicht dargestellten Positioniereinrichtung bewegt werden kann.

An der Kolbenhubpipette 1 befindet sich eine Koppelstelle 4 in Form eines Pipettenschafts, dessen Konizität der Konizität des oberen Endes der Pipettenspitze 2 entspricht. In Fig. 2 ist die Pipettenspitze 2 auf die Koppelstelle 4 aufgesteckt worden, was dem Verfahrensschritt a) entspricht. Die Kolbenhubpipette 1 ist in Fig. 2 mittels der Positioniereinrichtung in die Flüssigkeits-Aufnahmeposition gebracht worden, was dem Verfahrensschritt b) entspricht. Man sieht unten ein Vorratsgefäß 23, in dem sich Flüssigkeit befindet. Diese wird soeben mittels Wirkung der Verdrängereinheit 5 nach dem Luftpolsterprinzip in die Pipettenspitze 2 eingesogen, was dem Verfahrensschritt c) entspricht. Nach dem Aufsaugen und Anheben der Pipettenspitze 2 aus der Flüssigkeit im Vorratsgefäß 23 kann die Kolbenhubpipette 1 in eine andere Betriebsposition verfahren werden.

Fig. 3 zeigt eine Darstellung kurz vor der Ankoppelposition, was dem Verfahrensschritt d) entspricht.

In Fig. 4a ist die Kolbenhubpipette 1 mit der Mikrodosiereinheit 7 zusammengebracht worden, die sich auf einer Basisstation 11 befindet. Die Basisstation 11 dient als ortsfeste Ablage für die Mikrodosiereinheit 7 der Pipettiervorrichtung. Die Ankopplungseinrichtung 12 an der Kolbenhubpipette 1 steht mit der Gegenkopplungseinrichtung 13 so in Wechselwirkung, dass die Mikrodosiereinheit 7 fest an der Kolbenhubpipette 1 angekoppelt ist. Dies geschieht in einer definierten Relativlage. Die in Fig. 4a dargestellte Pipettenspitze 2 befindet sich mit ihrem Ausstoßende 3 genau vor dem Aktuator 8 der Mikrodosiereinheit 7, was dem Verfahrensschritt e) entspricht. Links in Fig. 4a in Höhe des Ausstoßendes 3 der Pipettenspitze 2 sieht man ein Widerlager 9. In Fig. 4b ist mittels eines Pfeils dargestellt, dass das Widerlager 9 an das Ausstoßende 3 der Pipettenspitze 2 angestellt wird.

Das Ankoppeln ist beendet, sobald das Widerlager 9 mittels eines eigenen Antriebs an das Ausstoßende 3 der Pipettenspitze 2 mit der gewünschten Vorspannkraft und/oder über den gewünschten Vorspannweg angestellt worden ist. Diese Ankoppelposition ist in Fig. 4b gezeigt.

In der Ankoppelposition gemäß Fig. 4b erfolgt auch das Konditionieren der Kolbenhubpipette 1. Alternativ kann dazu die Kolbenhubpipette 1 mitsamt der Mikrodosiereinheit 7 auch in eine Flüssigkeits-Abgabeposition gefahren werden, in der die Basisstation 11 angeordnet ist. Zum Konditionieren wird der Kolben 6 der Verdrängereinheit 5 so weit nach unten bewegt, wie zuvor weiter aufgesaugt wurde, so dass sich an der Mündungsöffnung des Ausstoßendes 3 ein Meniskus der darin befindlichen Flüssigkeit ausbildet.

Unter der Mündungsöffnung der Pipettenspitze 2 ist in der Basisstation 11 ein Gefäß 18 auswechselbar angeordnet. Die Flüssigkeit soll nun in das Gefäß 18 abgegeben werden. Dazu wird die Mikrodosiereinheit 7 in Betrieb genommen (Fig. 5a). Mit einer hin- und hergehenden Bewegung des Aktuators 8 wird auf das als elastisch verformbares Röhrchen ausgebildete, vom Widerlager 9 einseitig fixierte Ausstoßende 3 der Pipettenspitze 2 radial Kraft ausgeübt, so dass dieses verformt wird. Dadurch wird Flüssigkeit in Tröpfchenform aus der Mündungsöffnung der Pipettenspitze 2 in das Gefäß 18 abgegeben, was dem Verfahrensschritt f) entspricht.

Die Bewegung des Aktuators 8 ist in Fig. 5a mit einem Doppelpfeil angedeutet. Sie erfolgt hin- und hergehend gegen das Widerlager 9. Das ist zunächst die Konditionierung der Pipettiervorrichtung in Vorbereitung der eigentlichen Flüssigkeitsabgabe. Nach diesem ersten Konditionieren der Pipettiervorrichtung erfolgt das erfindungsgemäße Kalibrieren.

In Fig. 5a ist ein einzelner Kanal der Kolbenhubpipette 1 abgebildet und hier wird das gemäß Verfahrensschritt f) ausgestoßene Tröpfchen von einer radial zum Ausstoßende 3 der Pipettenspitze 2 ausgerichteten Kamera 15 in deren Bildausschnitt erfasst. Im Weiteren werden in diesem Verfahrensschritt g) die Daten des erfassten Bildes der Steuereinrichtung 14 der Basisstation 11 als Bestandteil der Pipettiervorrichtung und/oder einer anderen Steuereinrichtung der Pipettiervorrichtung übermittelt.

Im folgenden Verfahrensschritt h) ermittelt die Steuereinrichtung den Volumenwert des betroffenen Tröpfchens unter Annahme einer Rotationssymmetrie des Tröpfchens. Der Volumenwert kann durch verschiedene Verfahren ermittelt werden. Zum einen vergleicht die jeweilige Steuereinrichtung Referenzbilder mit dem Bild des Tröpfchens. Der Volumenwert des Tröpfchens wird mit dem als passend festgestellten Referenzbild ermittelt. Zum anderen definiert die Steuereinrichtung die Kontur des Tröpfchens und berechnet dessen Fläche. Auch kombiniert mit beiden Verfahren kann der Volumenwert mittels Vergleich der Werte ermittelt werden.

Die Steuereinrichtung vergleicht den im Verfahrensschritt h) ermittelten Volumenwert mit einem Volumen-Sollwert im Verfahrensschritt i). Abhängig von der dabei ermittelten Volumenabweichung wird der dem betroffenen Kanal zugeordnete Aktuator 8 in Richtung auf eine Annäherung an den Volumen-Sollwert verstellt. Die Verfahrensschritte f) bis i) werden für jeden Kanal wiederholt und dabei werden die für den Kanal nacheinander ermittelten Volumenwerte kumuliert.

In Abhängigkeit von der Annäherung des wiederholt bestimmten Volumenwertes und der Anzahl der Wiederholungen sowie vorgegebenen Werten, wie das Nennvolumen der Pipettenspitze 2, einem von dem Antrieb 21 abhängigen Sequenzvolumen und einem Restvolumen in der Pipettenspitze 2, können im Weiteren drei verschiedene Abläufe in der softwaregesteuerten Steuereinrichtung ablaufen. Die unterschiedlichen Abläufe können je nach Vorgaben auch kombiniert ablaufen.

Im Verfahrensschritt j1) wird der kumulierte Volumenwert mit einem in der Steuereinrichtung vorgegebenen Sequenzvolumenwert verglichen. Sobald bei einer Wiederholung der kumulierte Volumenwert sich gegenüber dem Sequenzvolumenwert bis auf ein Differenzvolumen angenähert hat, das geringer ist als der letzte ermittelte Volumenwert, oder den Sequenzvolumenwert erreicht oder erstmals überschritten hat, wird im Verfahrensschritt k1) die Wiederholung bei dem betroffenen Kanal beendet. Der Verfahrensschritt k1) endet insgesamt, wenn alle Kanäle dieses Kriterium erreicht haben.

Nach dem Verfahrensschritt k1) wird für den betroffenen Kanal der Kolben 6 der betroffenen Zylinder-Kolben-Einheit 5, angesteuert von der Steuereinrichtung, so verfahren, dass das Luftvolumen der Dosierkammer verringert und so der Flüssigkeitsverlust aus der Pipettenspitze 2 im Umfange des kumulierten Volumenwertes im Ausstoßende 3 neutralisiert wird. Diesen Verfahrensschritt I1) zeigt Fig. 5b. Er kann auch für alle Kanäle gleichzeitig erfolgen, wobei alle Kolben parallel, vorzugsweise von einem gemeinsamen Antrieb 21, verfahren werden und das Luftpolster mit dem Sequenzvolumenwert neutralisiert wird.

Die Verfahrensschritte f) bis l1) werden im Verfahrensschritt m1) wiederholt, bis der ermittelte Volumenwert in jedem Kanal innerhalb eines vorgegebenen Toleranzbereiches um den Volumen-Sollwert liegt oder längstens bis alle kumulierten Volumenwerte aus dem Verfahrensschritt j1) dem in Verfahrensschritt c) aufgesaugten Flüssigkeitsvolumen abzüglich eines Restvolumens entspricht.

Im weiteren optionalen Verfahrensschritt n1) wird ermittelt, ob der im Verfahrensschritt i) zuletzt ermittelte Volumenwert in jedem Kanal innerhalb eines vorgegebenen Toleranzbereiches um den Volumen-Sollwert liegt. Ist dieses Kriterium erfüllt, so werden nach dem Verfahrensschritt I1) mit der zuvor erreichten Einstellung der Aktuatoren 8 aus den Pipettenspitzen 2 der Kanäle, gesteuert von der Steuereinrichtung, Tröpfchen nicht mehr in das für die Kalibrierung genutzte Gefäß 18, sondern in zugeordnete Zielgefäße 24 abgegeben. Dies geschieht entweder in der Ankoppelposition selbst oder, vorzugsweise und wie in Fig. 6 gezeigt, in einer zuvor von der Kolbenhubpipette 1 mitsamt der Mikrodosiereinheit 7 angefahrenen (weiteren) Flüssigkeits-Abgabeposition.

Der in n1) beschriebene Vorgang, die Abgabe von Tröpfchen in der Flüssigkeits-Abgabeposition, wird bei Annähern an den Sequenzvolumenwert entsprechend Verfahrensschritt k1) unterbrochen und der Flüssigkeitsverlust wird durch den Verfahrensschritt l1) neutralisiert.

In einem anderen möglichen Ablauf finden sich zunächst die Verfahrensschritte a) bis i) in gleicher Weise wie zuvor beschrieben. Auf die voranstehenden Erläuterungen darf insoweit verwiesen werden. Beginnend mit dem Verfahrensschritt j4) werden die Verfahrensschritte f) bis i) für jeden Kanal wiederholt, und zwar so lange, bis der Volumenwert im jeweiligen Kanal innerhalb eines vorgegebenen Toleranzbereiches um den Volumen-Sollwert liegt. Je Kanal werden dann im Verfahrensschritt k4) die nacheinander ermittelten Volumenwerte kumuliert.

Die kumulierten Volumenwerte der Kanäle werden im folgenden Verfahrensschritt I4) verglichen. Der höchste kumulierte Volumenwert wird ermittelt (m4)). Der Verfahrensschritt f) oder die Verfahrensschritte f) bis i) werden außer bei dem Kanal mit dem höchsten kumulierten Volumenwert bei den anderen Kanälen so lange wiederholt, bis im jeweiligen Kanal der kumulierte Volumenwert dem bereits ermittelten höchsten kumulierten Volumenwert bis auf ein Differenzvolumen entspricht, das geringer ist als der letzte ermittelte Volumenwert des Kanals. Für die Größe des Differenzvolumens darf auf die generelle Anmerkung verwiesen werden, die oben zum dort erforderlichen Flüssigkeits-Restvolumen gemacht worden ist.

Nach dem Verfahrensschritt n) wird dann im Verfahrensschritt o4) jeder Kolben 6 der Zylinder-Kolben-Einheit 5, angesteuert von der Steuereinrichtung, in Abgaberichtung so verfahren, dass das Luftvolumen der Dosierkammer verringert und so der Flüssigkeitsverlust aus der Pipettenspitze 2 im Umfange des je Kanal kumulierten Volumenwertes, des höchsten kumulierten Volumenwertes oder des Mittelwerts aller kumulierten Volumenwerte im Ausstoßende 3 neutralisiert wird.

Bevorzugt kann man auch noch einen weiteren Verfahrensschritt realisieren, nämlich den Verfahrensschritt p4):

Nach dem Verfahrensschritt l4) werden mit der zuvor erreichten Einstellung der Aktuatoren 8 aus den Pipettenspitzen 2 der Kanäle, gesteuert von der Steuereinrichtung, Tröpfchen in zugeordnete Zielgefäße 24 abgegeben, und zwar in der Ankoppelposition oder in einer zuvor von der Kolbenhubpipette 1 mitsamt der Mikrodosiereinheit 7 angefahrenen Flüssigkeits-Abgabeposition.

Bevorzugt kann man weiter so verfahren, dass im Verfahrensschritt p4) die Abgabe von Tröpfchen in der Flüssigkeits-Abgabeposition bei Annähern an den höchsten kumulierten Volumenwert entsprechend Verfahrensschritt m4) oder an einen vorgegebenen Sequenzvolumenwert unterbrochen wird und der Flüssigkeitsverlust durch den Verfahrensschritt o4) neutralisiert wird.

Schließlich kann es sich empfehlen, dass der Verfahrensschritt I1) bzw. o4) für alle Zylinder-Kolben-Einheiten 5 gleichzeitig durchgeführt wird, insbesondere mittels eines für alle Kolben 6 gemeinsamen Antriebes (Fig. 9).

Auch für eine dritte mögliche Verfahrensweise gelten zunächst die bereits erläuterten Verfahrensschritte a) bis i), so dass auf die voranstehenden Erläuterungen zum ersten möglichen Ablauf des Verfahrens verwiesen werden darf.

Für diese dritte Variante eines erfindungsgemäßen Verfahrens werden, beginnend mit dem Verfahrensschritt j8), die Verfahrensschritte f) bis i) für jeden Kanal wiederholt, und zwar so lange, bis der Volumenwert im jeweiligen Kanal innerhalb eines vorgegebenen Toleranzbereiches um den Volumen-Sollwert liegt. Je Kanal werden in k8) die nacheinander ermittelten Volumenwerte kumuliert und der kumulierte Volumenwert wird mit einem in der Steuereinrichtung vorgegebenen maximalen Volumenwert, insbesondere dem Nennvolumen der Pipettenspitze, verglichen. Die Wiederholungen gemäß Verfahrensschritt k8) werden in l8) für den jeweiligen Kanal beendet, sobald der kumulierte Volumenwert dem maximalen Volumenwert bis auf ein Differenzvolumen entspricht, das geringer ist als der letzte bei diesem Kanal ermittelte Volumenwert. Nach dem Verfahrensschritt I8) für alle Kanäle wird die Restflüssigkeit mittels der Zylinder-Kolben-Einheiten 6 aus allen Pipettenspitzen 2 ausgestoßen. Der Verfahrensschritt m8) kann in der Ankoppelposition in das Gefäß 18 erfolgen. Alternativ wird in m8) die Kolbenhubpipette 1 mit der Mikrodosiereinheit 7 zu einem separaten Restvolumengefäß 25 verfahren wie es Fig.7 zeigt. Der Prozess wird danach ab Verfahrensschritt b) neu gestartet oder es wird eine Eingabe von dem Anwender gefordert.

In einem optionalen weiteren Verfahrensschritt n8) kann man weiter wie folgt vorgehen:
Liegt der im Verfahrensschritt m8) zuletzt ermittelte Volumenwert in jedem Kanal innerhalb eines vorgegebenen Toleranzbereiches um den Volumen-Sollwert, so werden nach dem Verfahrensschritt l8) mit der zuvor erreichten Einstellung der Aktuatoren 8 aus den Pipettenspitzen 2 der Kanäle, gesteuert von der Steuereinrichtung, Tröpfchen in zugeordnete Zielgefäße 24 abgegeben, und zwar in der Ankoppelposition oder in einer zuvor von der Kolbenhubpipette 1 mitsamt der Mikrodosiereinheit 7 angefahrenen Flüssigkeits-Abgabeposition.

In vorteilhafter Weise wird im Verfahrensschritt n8) die Abgabe von Tröpfchen bei Annähern an den maximalen Volumenwert entsprechend Verfahrensschritt l8) oder an einen vorgegebenen Sequenzvolumenwert unterbrochen und der Flüssigkeitsverlust wird durch einen analog zu dem Verfahrensschritt o4) durchgeführten Verfahrensschritt neutralisiert.

Vom Anwender kann eine Anzahl von Wiederholungen der Verfahrensschritte f) bis i) vorgegeben werden, die die Einstellung des Volumenwertes enden lässt. In einer alternativen vorteilhaften Ausgestaltung des Verfahrens werden abhängig vom Ergebnis des Vergleichs im Verfahrensschritt i) die Verfahrensschritte f) bis l1) bzw. f) bis o4) bzw. f) bis m8) bis zu einem Abschaltereignis oder -zeitpunkt wiederholt, wobei dann vorzugsweise eine Benutzereingabe gefordert wird.

In einer bevorzugten Variante des jeweils angewandten Verfahrens kann man vorsehen, dass die Verfahrensschritte j1) und k1) bzw. j4) bis n4) bzw. j8) bis l8) für die Kanäle der Kolbenhubpipette 1 nicht gleichzeitig durchgeführt werden, sondern in einer bestimmten Reihenfolge nacheinander und/oder für benachbarte Kanäle nicht gleichzeitig und insgesamt bis diese Verfahrensschritte für alle Kanäle abgeschlossen worden sind.

Die Steuereinrichtung ist in zweckmäßiger Weise so programmiert, dass sie sich nach einem Wechsel der Flüssigkeit und/oder nach einem Wechsel der Pipettenspitzen 2 selbst optimiert. Im Verfahrensschritt g) vergleicht die Steuereinrichtung dazu verschiedene Einstellungen. Die Steuereinrichtung passt ebenso den Zeitpunkt der Ansteuerung des Aktuators 8 und/oder einer Stroboskopleuchte 16 und/oder einer Bildabfrage im Sinne einer optimalen Darstellung und zentralen Position des zu erfassenden Tröpfchens im Bildausschnitt der Kamera 15 an. Bevorzugt wird dabei bzw. im Verfahrensschritt g) der Bildausschnitt als Einzelbild oder ein Einzelbild aus einem Strom an Einzelbildern selektiert erfasst.

Die Steuereinrichtung kann im Verfahrensschritt i) zur Verformung des Ausstoßendes 3 der jeweiligen Pipettenspitze 2 verschiedene Parameter beeinflussen. So kann mittels der Steuereinrichtung in passender Weise verstellt werden:
- der Zeitpunkt der Verformung in Bezug zur Bilderfassung im Verfahrensschritt g),
- der Hubweg,
- die jeweilige Verweilzeit beim Wechsel der Hubrichtung,
- der Vorspannweg und/oder die Vorspannkraft der Verformung des Ausstoßendes 3,
- am Ausstoßende 3 der Abstand zwischen Verformung und Ausstoßöffnung,
- der Winkel zwischen Ausstoßende 3 und Aktuator 8 und/oder
- die Dynamik des jeweiligen Aktuators 8, insbesondere die Vorwärts-Beschleunigung, Vorwärts-Geschwindigkeit, Rückzugs-Beschleunigung und/oder Rückzugs-Geschwindigkeit und zwar in Abhängigkeit von der im Verfahrensschritt i) ermittelten Volumenabweichung und/oder von der Kontur oder der Position des Tröpfchens.

Nach bevorzugter Lehre gibt im Verfahrensschritt i) der Anwender zuvor der Steuereinrichtung Eingabewerte vor. Diese Werte umfassen den Toleranzbereich des Volumen-Sollwertes, den Sequenzvolumenwert, das Restvolumen, die Dosierflüssigkeit, Daten zu der Dosierflüssigkeit, die Parameter des einstellbaren Aktuators 8 und/oder Daten oder Algorithmen zur Verstellung des Aktuators 8 durch die Steuereinrichtung. Die Steuereinrichtung verstellt den jeweiligen Aktuator 8 bevorzugt nur dann, wenn die Volumenabweichung größer als der Toleranzbereich ist. Alternativ oder bevorzugt nach der Wiederholung in einem entsprechenden Verfahrensschritt wird der Aktuator 8 unter Berücksichtigung der Annäherung der Volumenabweichung an den Toleranzbereich gegenüber einem vorherigen Verfahrensschritt i) verändert oder verstellt.

Bevorzugt kann man auch vorsehen, dass vor einem Wiederholen des Verfahrensschrittes j1) bzw. j4) bzw. j8) je Kanal die Differenz zwischen einem Sequenzvolumenwert und einem vorherigen kumulierten Volumenwert ermittelt wird und die Differenz im nächsten Verfahrensschritt j1) bzw. j4) bzw. j8) als ein Volumenwert, wie im Verfahrensschritt h) ermittelt, kumuliert wird.

In einer weiteren vorteilhaften Ausgestaltung wird nach Erreichen der Ankoppelposition im Verfahrensschritt e) das Ausstoßende 3 vertikal ausgerichtet und wozu der zugeordnete Aktuator 8 der Mikrodosiereinheit 7 orthogonal dazu beweglich ist. Der Aktuator 8 tritt radial, vorzugsweise rechtwinklig mit dem Ausstoßende 3 der Pipettenspitze 2 in Wechselwirkung.

Das im Verfahrensschritt g) definierte Erfassen des Bildes im Bildausschnitt wird durch eine gegenüber zur Kamera 15 angeordnete Beleuchtungseinrichtung 16, die den Bildausschnitt ausleuchtet, unterstützt.

Der beschriebene Vorgang, dass nach einer bestimmten Abgabe von Tröpfchen der Flüssigkeitsverlust neutralisiert wird, erfolgt mit den beschriebenen bzw. bestimmten Volumenwerten. Diese Volumenwerte liegen typischerweise zwischen 10 und 2000 nl, insbesondere zwischen 25 und 500 nl, vorzugsweise bei etwa 150 nl. Die Volumenwerte sind durch das Volumen der Druckkammer mitbestimmt und deren kleinster Wert ist durch den kleinstmöglichen Kolbenhub der Zylinder-Kolben-Einheit begrenzt.

Insgesamt ermittelt man ein verlässliches Volumen des jeweils betroffenen Tröpfchens auf der Grundlage des erfindungsgemäßen Verfahrens mit Einsatz einer Kamera 15. Bevorzugt arbeitet das erfindungsgemäße Verfahren dabei so, dass der im Verfahrensschritt h) durch die Steuereinrichtung ermittelte Volumenwert des betroffenen Tröpfchens durch Vergleich des im Verfahrensschritt g) erfassten Bildes mit einem gespeicherten Referenzbild ermittelt und/oder aus den Daten des im Verfahrensschritt g) erfassten Bildes die Kontur des Tröpfchens berechnet wird. Insbesondere gilt, dass die Steuereinrichtung den Volumenwert des betroffenen Tröpfchens aus dem Volumenwert des Tröpfchens des als passend festgestellten Referenzbildes, aus der errechneten Kontur des Tröpfchens unter Annahme einer Rotationssymmetrie des Tröpfchens oder aus beidem ermittelt.

### Bezugszeichenliste:

- 1: Kolbenhubpipette
- 2: Pipettenspitze
- 3: Ausstoßende
- 4: Koppelstelle
- 5: Verdrängereinheit
- 6: Kolben
- 7: Mikrodosiereinheit
- 8: Aktuator
- 9: Widerlager
- 10: Steuereinrichtung von 7
- 11: Basisstation
- 12: Ankopplungseinrichtung
- 13: Gegenkopplungseinrichtung
- 14: Steuereinrichtung von 11
- 15: Kamera
- 16: Beleuchtungseinheit
- 17: Spiegel
- 18: Gefäß
- 19: Fenster
- 19': Fenster
- 20: Traggestell
- 21: Antrieb von 5
- 22: Halterung
- 23: Vorratsgefäß
- 24: Zielgefäß
- 25: Restvolumengefäß

## Patentansprüche

1. Verfahren zum Steuern einer Pipettiervorrichtung für Dosierflüssigkeit mit einer mehrkanaligen, automatisierten Mikrodosiereinheit, wobei die Pipettiervorrichtung aufweist
- eine Luftpolster-Kolbenhubpipette (1) mit je Kanal einer Zylinder-Kolben-Einheit mit einer Dosierkammer mit einem durch Bewegung des Kolbens veränderlichen Luftvolumen und einer mit der Dosierkammer strömungstechnisch verbundenen Koppelstelle, an der eine ein radial elastisch verformbares Ausstoßende aufweisende Pipettenspitze (2) ankoppelbar ist,
- eine Mikrodosiereinheit (7) mit einem in mindestens einem Parameter einstellbaren Aktuator je Kanal und
- eine elektronische Steuereinrichtung (14),
wobei die Kolbenhubpipette wahlweise alleine oder mitsamt der Mikrodosiereinheit (7) in verschiedene Betriebspositionen verfahrbar ist, mit folgenden Verfahrensschritten:
a) In einer Pipettenspitzen-Aufnahmeposition wird an jeder Koppelstelle der Kolbenhubpipette eine Pipettenspitze angekoppelt.
b) Die Kolbenhubpipette wird in eine Flüssigkeits-Aufnahmeposition verfahren.
c) In der Flüssigkeits-Aufnahmeposition werden die Pipettenspitzen mit ihren Ausstoßenden in Flüssigkeit eingetaucht, die sich in mindestens einem Vorratsgefäß befindet, und durch eine von der Steuereinrichtung gesteuerte Bewegung der Kolben der Zylinder-Kolben-Einheiten wird Flüssigkeit in die Pipettenspitzen eingesaugt.
d) Die Kolbenhubpipette wird in eine Ankoppelposition verfahren.
e) In der Ankoppelposition wird die Kolbenhubpipette dergestalt mit der Mikrodosiereinheit gekoppelt, dass jeweils ein Ausstoßende (3) einer Pipettenspitze vor einem Aktuator der Mikrodosiereinheit positioniert ist.
f) In der Ankoppelposition oder in einer Flüssigkeits-Abgabeposition, zu der die Kolbenhubpipette mitsamt der Mikrodosiereinheit verfahren wurde, werden die Aktuatoren (8) ausgehend von der Steuereinrichtung angesteuert und die Ausstoßenden der Pipettenspitzen von den ihnen jeweils zugeordneten Aktuatoren individuell radial verformt, so dass ein Teil der im jeweiligen Ausstoßende befindlichen Flüssigkeit in Tröpfchenform ausgestoßen wird.
**Gekennzeichnet durch** folgende weitere Verfahrensschritte:
g) Individuell je Kanal wird das im Verfahrensschritt f) ausgestoßene Tröpfchen von einer radial zum Ausstoßende der Pipettenspitze ausgerichteten Kamera (15) in deren Bildausschnitt erfasst und die Daten des erfassten Bildes werden der Steuereinrichtung übermittelt.
h) Mittels der Steuereinrichtung wird der Volumenwert des betroffenen Tröpfchens unter Annahme einer Rotationssymmetrie des Tröpfchens ermittelt.
i) Der im Verfahrensschritt h) ermittelte Volumenwert wird mit einem Volumen-Sollwert verglichen und abhängig von der dabei ermittelten Volumenabweichung wird der dem betroffenen Kanal zugeordnete Aktuator in Richtung auf eine Annäherung an den Volumen-Sollwert verstellt, wobei die Verfahrensschritte f) bis i) für jeden Kanal wiederholt werden.
j1) Bei der Wiederholung der Verfahrensschritte f) bis i) werden die für den Kanal nacheinander ermittelten Volumenwerte kumuliert und der kumulierte Volumenwert wird mit einem in der Steuereinrichtung vorgegebenen Sequenzvolumenwert verglichen.
k1) Die Wiederholungen gemäß Verfahrensschritt j1) werden bei den Kanälen beendet, deren kumulierter Volumenwert sich dem Sequenzvolumenwert bis auf ein Differenzvolumen angenähert hat, das geringer ist als der letzte ermittelte Volumenwert, oder den Sequenzvolumenwert erreicht oder erstmals überschritten hat.
I1) Nach Verfahrensschritt k1) wird für den betroffenen Kanal der Kolben der betroffenen Zylinder-Kolben-Einheit, angesteuert von der Steuereinrichtung, so verfahren, dass das Luftvolumen der Dosierkammer verringert und so der Flüssigkeitsverlust aus der Pipettenspitze im Umfange des kumulierten Volumenwertes oder des Sequenzvolumenwertes im Ausstoßende neutralisiert wird.
m1) die Verfahrensschritte f) bis I1) werden wiederholt, bis der ermittelte Volumenwert in jedem Kanal innerhalb eines vorgegebenen Toleranzbereiches um den Volumen-Sollwert liegt oder längstens bis alle kumulierten Volumenwerte aus dem Verfahrensschritt j1) dem in Verfahrensschritt c) aufgesaugten Flüssigkeitsvolumen abzüglich eines Restvolumens entspricht.
Alternativ zu den Verfahrensschritten j1) bis m1) werden die folgenden Verfahrensschritte durchgeführt:
j4) Die Verfahrensschritte f) bis i) werden für jeden Kanal so lange wiederholt, bis der Volumenwert im jeweiligen Kanal innerhalb eines vorgegebenen Toleranzbereiches um den Volumen-Sollwert liegt.
k4) Je Kanal werden die nacheinander ermittelten Volumenwerte kumuliert.
I4) Die kumulierten Volumenwerte der Kanäle werden verglichen.
m4)Der höchste kumulierte Volumenwert aller Kanäle wird ermittelt.
n4) Verfahrensschritt f) oder die Verfahrensschritte f) bis i) werden, außer bei dem Kanal mit dem höchsten kumulierten Volumenwert, bei den anderen Kanälen so lange wiederholt, bis im jeweiligen Kanal der kumulierte Volumenwert dem höchsten kumulierten Volumenwert bis auf ein Differenzvolumen entspricht, das geringer ist als der letzte ermittelte Volumenwert des Kanals.
o4) Nach dem Verfahrensschritt n4) wird jeder Kolben der Zylinder-Kolben-Einheit, angesteuert von der Steuereinrichtung, in Abgaberichtung so verfahren, dass das Luftvolumen der Dosierkammer verringert und so der Flüssigkeitsverlust aus der Pipettenspitze im Umfange des je Kanal kumulierten Volumenwertes, des höchsten kumulierten Volumenwertes oder des Mittelwerts aller kumulierten Volumenwerte im Ausstoßende neutralisiert wird.
Alternativ zu den Verfahrensschritten j1) bis m1) oder j4) bis o4) werden die folgenden Verfahrensschritte durchgeführt:
j8) Die Verfahrensschritte f) bis i) werden für jeden Kanal so lange wiederholt, bis der Volumenwert im jeweiligen Kanal innerhalb eines vorgegebenen Toleranzbereiches um den Volumen-Sollwert liegt.
k8) Je Kanal werden die nacheinander ermittelten Volumenwerte kumuliert und der kumulierte Volumenwert wird mit einem in der Steuereinrichtung vorgegebenen maximalen Volumenwert verglichen.
I8) Die Wiederholungen gemäß Verfahrensschritt j8) werden für den jeweiligen Kanal beendet, sobald der kumulierte Volumenwert dem maximalen Volumenwert bis auf ein Differenzvolumen entspricht, das geringer ist als der letzte bei diesem Kanal ermittelte Volumenwert.
m8)Nach Verfahrensschritt I8) für alle Kanäle wird die Restflüssigkeit mittels der Zylinder-Kolben-Einheiten aus allen Pipettenspitzen ausgestoßen und der Prozess ab Verfahrensschritt b) neu gestartet oder eine Eingabe vom Anwender gefordert.

2. Verfahren nach Anspruch 1, **gekennzeichnet durch** folgenden weiteren Verfahrensschritt:
n1) Liegt der im Verfahrensschritt i) zuletzt ermittelte Volumenwert in jedem Kanal innerhalb eines vorgegebenen Toleranzbereiches um den Volumen-Sollwert, so werden nach dem Verfahrensschritt I1) mit der zuvor erreichten Einstellung der Aktuatoren aus den Pipettenspitzen der Kanäle, gesteuert von der Steuereinrichtung, Tröpfchen in zugeordnete Zielgefäße (24) abgegeben, und zwar in der Ankoppelposition oder in einer zuvor von der Kolbenhubpipette mitsamt der Mikrodosiereinheit angefahrenen Flüssigkeits-Abgabeposition.

3. Verfahren nach Anspruch 2, **dadurch gekennzeichnet,**
**dass** im Verfahrensschritt n1) die Abgabe von Tröpfchen bei Annähern an den Sequenzvolumenwert entsprechend Verfahrensschritt k1) unterbrochen und der Flüssigkeitsverlust durch den Verfahrensschritt I1) neutralisiert wird.

4. Verfahren nach Anspruch 1, **gekennzeichnet durch** folgenden weiteren Verfahrensschritt:
p4) Nach dem Verfahrensschritt I4) werden mit der zuvor erreichten Einstellung der Aktuatoren aus den Pipettenspitzen der Kanäle, gesteuert von der Steuereinrichtung, Tröpfchen in zugeordnete Zielgefäße abgegeben, und zwar in der Ankoppelposition oder in einer zuvor von der Kolbenhubpipette mitsamt der Mikrodosiereinheit angefahrenen Flüssigkeits-Abgabeposition.

5. Verfahren nach Anspruch 4, **dadurch gekennzeichnet,**
**dass** im Verfahrensschritt p4) die Abgabe von Tröpfchen in der Flüssigkeits-Abgabeposition bei Annähern an den höchsten kumulierten Volumenwert entsprechend Verfahrensschritt m4) oder an einen vorgegebenen Sequenzvolumenwert unterbrochen wird und der Flüssigkeitsverlust durch den Verfahrensschritt o4) neutralisiert wird.

6. Verfahren nach einem der Ansprüche 1 bis 5, **dadurch gekennzeichnet,**
**dass** der Verfahrensschritt I1) bzw. o4) für alle Zylinder-Kolben-Einheiten gleichzeitig durchgeführt wird, insbesondere mittels eines für alle Kolben gemeinsamen Antriebes.

7. Verfahren nach Anspruch 1, **gekennzeichnet durch** folgenden weiteren Verfahrensschritt:
n8) Liegt der im Verfahrensschritt m8) zuletzt ermittelte Volumenwert in jedem Kanal innerhalb eines vorgegebenen Toleranzbereiches um den Volumen-Sollwert, so werden nach dem Verfahrensschritt I8) mit der zuvor erreichten Einstellung der Aktuatoren aus den Pipettenspitzen der Kanäle, gesteuert von der Steuereinrichtung, Tröpfchen in zugeordnete Zielgefäße abgegeben, und zwar in der Ankoppelposition oder in einer zuvor von der Kolbenhubpipette mitsamt der Mikrodosiereinheit angefahrenen Flüssigkeits-Abgabeposition.

8. Verfahren nach Anspruch 7, **dadurch gekennzeichnet,**
**dass** im Verfahrensschritt n8) die Abgabe von Tröpfchen bei Annähern an den maximalen Volumenwert entsprechend Verfahrensschritt I8) oder an einen vorgegebenen Sequenzvolumenwert unterbrochen und der Flüssigkeitsverlust durch einen analog zu dem Verfahrensschritt o4) durchgeführten Verfahrensschritt neutralisiert wird.

9. Verfahren nach einem der Ansprüche 1 bis 8, **dadurch gekennzeichnet,**
**dass** die Einstellung des Volumenwertes beendet wird, wenn eine vom Anwender vorgegebene Anzahl von Wiederholungen der Verfahrensschritte f) bis i) erreicht worden ist oder
**dass** abhängig vom Ergebnis des Vergleichs im Verfahrensschritt i) die Verfahrensschritte f) bis I1) bzw. f) bis o4) bzw. f) bis m8) wiederholt werden bis zu einem Abschaltereignis oder -zeitpunkt, wobei dann vorzugsweise eine Benutzereingabe gefordert wird.

10. Verfahren nach einem der Ansprüche 1 bis 9, **dadurch gekennzeichnet,**
**dass** die Verfahrensschritte j1) und k1) bzw. j4) bis n4) bzw. j8) bis I8) für die Kanäle der Kolbenhubpipette nicht gleichzeitig durchgeführt werden, sondern in einer bestimmten Reihenfolge nacheinander und/oder für benachbarte Kanäle nicht gleichzeitig und insgesamt bis diese Verfahrensschritte für alle Kanäle abgeschlossen worden sind.

11. Verfahren nach einem der Ansprüche 1 bis 10, **dadurch gekennzeichnet,**
**dass** nach einem Wechsel der Flüssigkeit und/oder nach einem Wechsel der Pipettenspitzen die Steuereinrichtung im Verfahrensschritt g) verschiedene Einstellungen vergleicht und den Zeitpunkt der Ansteuerung des Aktuators und/oder einer Stroboskopleuchte und/oder einer Bildabfrage im Sinne einer optimalen Darstellung und zentralen Position des zu erfassenden Tröpfchens im Bildausschnitt der Kamera anpasst.

12. Verfahren nach einem der Ansprüche 1 bis 11, **dadurch gekennzeichnet,**
**dass** die Steuereinrichtung im Verfahrensschritt i) zur Verformung des Ausstoßendes verstellt:
- den Zeitpunkt der Verformung in Bezug zur Bilderfassung im Verfahrensschritt g),
- den Hubweg,
- die jeweilige Verweilzeit beim Wechsel der Hubrichtung,
- den Vorspannweg und/oder die Vorspannkraft der Verformung des Ausstoßendes,
- am Ausstoßende den Abstand zwischen Verformung und Ausstoßöffnung,
- den Winkel zwischen Ausstoßende und Aktuator und/oder
- die Dynamik des jeweiligen Aktuators, insbesondere die Vorwärts-Beschleunigung, Vorwärts-Geschwindigkeit, Rückzugs-Beschleunigung und/oder Rückzugs-Geschwindigkeit und zwar in Abhängigkeit von der im Verfahrensschritt i) ermittelten Volumenabweichung und/oder von der Kontur oder der Position des Tröpfchens.

13. Verfahren nach einem der Ansprüche 1 bis 12, **dadurch gekennzeichnet,**
**dass** im Verfahrensschritt i) der Anwender zuvor der Steuereinrichtung Eingabewerte vorgibt, die umfassen den Toleranzbereich des Volumen-Sollwertes, den Sequenzvolumenwert, das Restvolumen, die Dosierflüssigkeit, Daten zu der Dosierflüssigkeit, die Parameter des einstellbaren Aktuators und/oder Daten oder Algorithmen zur Verstellung des Aktuators durch die Steuereinrichtung, wobei, vorzugsweise, der Aktuator nur dann von der Steuereinrichtung verstellt wird, wenn die Volumenabweichung größer als der Toleranzbereich ist und/oder der Aktuator nach einem entsprechenden Verfahrensschritt unter Berücksichtigung der Annäherung der Volumenabweichung an den Toleranzbereich gegenüber einem vorherigen Verfahrensschritt i) verändert verstellt wird.

## Claims

1. Method for controlling a pipetting device for metered liquid with a multichannel, automated micrometering unit,
the pipetting device having
- an air-cushion piston-stroke pipette (1) with, for each channel, a cylinder-piston unit with a metering chamber with a volume of air which can be varied by moving the piston and a coupling location which is flow-connected to the metering chamber and on which a pipette tip (2) having a radially elastically deformable expulsion end is mountable,
- a micrometering unit (7) with, for each channel, an actuator which can be set in accordance with at least one parameter and
- an electronic control device (14),
wherein the piston-stroke pipette is movable into various operating positions optionally alone or together with the micrometering unit (7),
comprising the following method steps:
a) In a pipette tip pick-up position a
pipette tip is coupled at each coupling location of
the piston-stroke pipette.
b) The piston-stroke pipette is moved into a liquid take-up position.
c) In the liquid take-up position expulsion ends of the pipette tips are immersed into liquid which is located in at least one storage vessel, and liquid is sucked into the pipette tips by movement of the pistons of the cylinder-piston units controlled by the control device.
d) The piston-stroke pipette is moved into a coupling position.
e) In the coupling position the piston-stroke pipette is coupled to the micrometering unit in such a way that the expulsion end (3) of each pipette tip is positioned in front of a respective actuator of the micrometering unit.
f) In the coupling position or in a liquid dispensing position, to which the piston-stroke pipette has been moved together with the micrometering unit, the actuators (8) are activated by the control device to individually radially deform each of the expulsion ends of the pipette tips with the respective actuator, so that part of the liquid located in the respective expulsion end is expelled in droplet form.
**Characterized by** the following method steps:
g) Individually for each channel the droplet expelled in preceding step f) in an image section of a camera (15) aligned radially with the expulsion end of each pipette tip and data of a detected image to the control device.
h) A volume value of the droplet detected is determined under the assumption of a rotational symmetry of the droplet via the control device.
i) The volume value determined in preceding step h) is compared with a setpoint volume value and, depending on a volume deviation determined from the comparison, the respective actuator is adjusted in a direction toward the setpoint volume value.
j1) By repeating steps f) to i) for each channel the volume values successively determined for the channel are accumulated and the accumulated volume value is compared with a sequence volume value prescribed in the control device.
k1) The repetitions according to step j1) are ended in the case of the channels for which the accumulated volume value has approached the sequence volume value to within a difference in volume which is smaller than the last determined volume value, or has reached the sequence volume value or exceeded it for the first time.
11) After method step k1), for the respective channel, the piston of the respective cylinder-piston unit, activated by the control device, is moved in such a way that the volume of air of the metering chamber is reduced and so the loss of liquid from the pipette tip is neutralized to the extent of the accumulated volume value or the sequence volume value in the expulsion end.
m1) The method steps f) to 11) are repeated until the determined volume value in each channel lies within a prescribed tolerance range around the setpoint volume value or at the longest until all of the accumulated volume values from method step j1) correspond to the liquid volume sucked up in method step c) less a residual volume.
Alternatively to the method steps j1) to m1) the following method steps are carried out:
j4) The method steps f) to i) are repeated for each channel, until the volume value in the respective channel lies within a prescribed tolerance range around the setpoint volume value.
k4) For each channel the successively determined volume values are accumulated.
14) The accumulated volume values of the channels are compared.
m4) The highest accumulated volume value of all of the channels is determined.
n4) Except for the channel with the highest accumulated volume value, method step f) or method steps f) to i) are repeated for the other channels until, in each channel, the accumulated volume value corresponds to the highest accumulated volume value to within a difference in volume which is smaller than the last determined volume value of the channel.
o4) After method step n4), each piston of the cylinder-piston unit is activated with the control device so as move each piston in the dispensing direction in such a way that the volume of air of the metering chamber is reduced and so that loss of liquid from the pipette tip is neutralized to the extent of the accumulated volume value for each channel, the highest accumulated volume value or the mean value of all of the accumulated volume values in the expulsion end.
Alternatively to the methods steps j1) to m1) or j4) to o4) the following method steps are carried out:
j8) The method steps f) to i) are repeated for each channel until the volume value for the respective channel lies within a prescribed tolerance range around the setpoint volume value.
k8) For each channel, successively determined volume values are accumulated and the accumulated volume value is compared with a maximum volume value prescribed in the control device.
18) The repetitions according to feature j8) are ended for the respective channel as soon as the accumulated volume value corresponds to the maximum volume value to within a difference in volume which is smaller than the volume value last determined for the channel.
m8) After method step 18), for all of the channels, residual liquid is expelled from all of the pipette tips by means of the cylinder-piston units and the process from method step b) is restarted or an user input is required.

2. Method according to claim 1, **characterized by** the following further method step:
n1) If the volume value last determined in method step i) in each channel lies within a prescribed tolerance range around the setpoint volume value, then, after method step 11), droplets are dispensed into assigned target vessels (24) from the pipette tips of the channels, controlled by the control device with the previously achieved setting of the actuators, namely in the coupling position or in a liquid dispensing position previously reached by the piston-strake pipette together with the micrometering unit.

3. Method according to claim 2, **characterized in that** in step n1) the dispensing of droplets is interrupted when approaching the sequence volume value corresponding to step k1) and the loss of liquid is neutralized by step 11).

4. Method according to claim 1, **characterized by** the following further method step:
p4) After step 14) droplets are dispensed into assigned target vessels with the previously achieved setting of the actuators from the pipette tips of the channels, controlled by the control device, namely in the coupling position or in a liquid dispensing position previously reached by the piston-stroke pipette together with the micrometering unit.

5. Method according to claim 4, **characterized in that** in step p4), the dispensing of droplets in the liquid dispensing position is interrupted when approaching the highest accumulated volume value corresponding to step m4), or a prescribed sequence volume value and the loss of liquid is neutralized by method step o4).

6. Method according to one of the claims 1 to 5, **characterized in that** the step 11) and/or o4) is carried out for all of the cylinder piston units simultaneously, in particular by means of a drive common to all positions.

7. Method according to claim 1, **characterized by** the following further method step:
n8) If the volume value last determined in method step m8) in each channel lies within a prescribed tolerance range around the setpoint volume value, then, after method step 18), droplets are dispensed from the pipette tips of the channels into assigned target vessels with the previous setting of the actuators, controlled by the control device, namely in the coupling position or
in a liquid dispensing position previously reached by the piston-stroke pipette together with the micrometering unit.

8. Method according to claim 7, **characterized in that** in step n8), the dispensing of droplets is interrupted when approaching the maximum volume value corresponding to feature 18) or a prescribed sequence volume value and the loss of liquid is neutralized by a method step carried out analogously to method step o4).

9. Method according to one of claims 1 to 8, **characterized in that**
the setting of the volume value is terminated when a user-defined number of repetitions of process steps f) to i) has been reached, or
**in that**, depending on the result of the comparison in method step i), method steps f) to 11) or f) to o4) or f) to m8) are repeated until a switch-off event or time, wherein an user input is then preferably requested.

10. Method according to one of claims 1 to 9, **characterized in that**
the method steps j1) and k1) and/or j4) to n4) and/or j8) to 18) are not carried out simultaneously for the channels of the piston-stroke pipette, but are carried out in a specific sequence one after the other and/or are not carried out simultaneously for adjacent channels and in total until these method steps have been completed for all channels.

11. Method according to one of claims 1 to 10, **characterized in that**,
after a change of the liquid and/or after a change of the pipette tips, the control device in method step g) compares different settings and adapts the time of actuation of the actuator and/or of a stroboscopic light and/or of an image interrogation in the sense of an optimum display and central position of the droplet to be detected in the image section of the camera.

12. Method according to one of claims 1 to 11, **characterized in that** the control device adjusts in process step i) to deform the expulsion end:
- the time of the deformation in relation to the image acquisition in step (g),
- the lift path,
- the respective dwell time when changing the lifting direction,
- the preload travel and/or the preload force of the deformation of the expulsion end,
- at the expulsion end the distance between deformation and expulsion opening,
- the angle between expulsion end and actuator and/or
- the dynamics of the respective actuator, in particular the forward acceleration, forward speed, retraction acceleration and/or retraction speed, depending on the volume deviation determined in method step i) and/or on the contour or position of the droplet.

13. Method according to one of claims 1 to 12, **characterized in that**,
in method step i), the user previously prescribes to the control device input values which comprise the tolerance range of the volume setpoint value, the sequence volume value, the residual volume, the metering liquid, data relating to the metering liquid, the parameters of the adjustable actuator and/or data or algorithms for adjusting the actuator by the control device,
wherein, preferably, the actuator is only adjusted by the control device if the volume deviation is greater than the tolerance range and/or
the actuator is adjusted in a modified manner after a corresponding process step, taking into account the approximation of the volume deviation to the tolerance range compared to a previous process step i).

## Revendications

1. Procédé de commande d'un dispositif de pipetage pour le dosage de liquide avec une unité de microdosage automatisée à plusieurs canaux, le dispositif de pipetage comprenant
- une pipette à piston à coussin d'air (1)
avec une unité cylindre-piston par canal avec
une chambre de dosage avec un volume d'air qui peut être modifié par le mouvement du piston et un point d'accouplement qui est en liaison fluidique avec la chambre de dosage et auquel peut être accouplée une pointe de pipette (2) ayant une extrémité d'éjection radialement élastiquement déformable,
- une unité de microdosage (7)
avec un actionneur par canal réglable dans au moins un paramètre et
- un dispositif de contrôle électronique (14),
dans laquelle la pipette à piston peut être déplacée dans différentes positions de fonctionnement, seule ou avec l'unité de microdosage (7),
avec les étapes de procédé suivantes:
a) Dans une position de réception de pointe de pipette, une pointe de pipette est couplée à chaque point de couplage de la pipette à piston.
b) La pipette à piston est déplacée vers une position de réception du liquide.
c) En position de réception du liquide, les pointes de pipette sont immergées avec leurs extrémités éjectrices dans le liquide contenu dans au moins un récipient de stockage, et le liquide est aspiré dans les pointes de pipette par un mouvement des pistons des unités cylindre-piston commandées par le dispositif de commande.
d) La pipette à piston est déplacée en position de couplage.
e) En position d'accouplement, la pipette à piston est accouplée à l'unité de microdosage de telle sorte qu'une extrémité d'éjection (3) de la pointe de la pipette est placée devant un actionneur de l'unité de microdosage.
f) Dans la position de couplage ou dans une position de distribution de liquide dans laquelle la pipette à piston a été déplacée avec l'unité de microdosage, les actionneurs (8) sont commandés depuis le dispositif de commande et les extrémités d'éjection des pointes de pipette sont individuellement déformées radialement par les actionneurs qui leur sont affectés, de sorte qu'une partie du liquide dans l'extrémité d'éjection respective est éjectée sous forme de gouttelettes.
**Caractérisé par les** étapes supplémentaires de procédé suivantes:
g) Individuellement pour chaque canal, la gouttelette éjectée à l'étape f) de la méthode est enregistrée dans sa partie image par une caméra (15) alignée radialement sur l'extrémité d'éjection de la pointe de la pipette, et les données de l'image enregistrée sont transmises à le dispositif de commande.
h) Au moyen du dispositif de commande, la valeur du volume de la gouttelette concernée est déterminée en supposant une symétrie de rotation de la gouttelette.
i) La valeur de volume déterminée à l'étape h) est comparée à une valeur de consigne de volume et, en fonction de l'écart de volume déterminé au cours du processus, l'actionneur attribué au canal concerné est ajusté dans le sens d'un rapprochement de la valeur de consigne de volume, les étapes f) à i) étant répétées pour chaque canal.
j1) Lors de la répétition des étapes f) à i) du processus, les valeurs de volume déterminées successivement pour le canal sont cumulées et la valeur de volume cumulée est comparée à une valeur de volume séquentielle spécifiée dans le dispositif de commande.
k1) Les répétitions selon l'étape j1) de la procédure sont terminées pour les canaux dont la valeur de volume cumulée s'est approchée de la valeur de volume de la séquence, à l'exception d'un volume de différence qui est inférieur à la dernière valeur de volume déterminée, ou qui a atteint ou dépassé la valeur de volume de la séquence pour la première fois.
I1) Après l'étape k1) du procédé, le piston de l'unité cylindre-piston concernée, commandé par le dispositif de commande, est déplacé pour le canal concerné de telle sorte que le volume d'air de la chambre de dosage soit réduit et que la perte de liquide de la pointe de la pipette soit ainsi neutralisée à hauteur de la valeur du volume cumulé ou de la valeur du volume séquentiel à l'extrémité d'éjection.
m1) Les étapes de procédé f) à I1) sont répétées jusqu'à ce que la valeur de volume déterminée dans chaque canal se situe dans une plage de tolérance prédéterminée autour de la valeur de consigne du volume ou au plus tard jusqu'à ce que toutes les valeurs de volume cumulées de l'étape de procédé j1) correspondent au volume de liquide absorbé à l'étape de procédé c) moins un volume résiduel.
En alternative aux étapes j1) à m1), les étapes suivantes sont réalisées :
j4) Les étapes f) à i) de procédé sont répétées pour chaque canal jusqu'à ce que la valeur du volume dans le canal respectif se trouve dans une plage de tolérance spécifiée autour de la valeur de consigne du volume.
k4) Pour chaque canal, les valeurs de volume déterminées successivement sont cumulées.
I4) Les valeurs de volume cumulées des chaînes sont comparées.
m4) La valeur de volume cumulée la plus élevée de tous les canaux est déterminée.
n4) L'étape f) ou les étapes f) à i), sauf pour le canal ayant la valeur de volume cumulé la plus élevée, sont répétées pour les autres canaux jusqu'à ce que la valeur de volume cumulé dans le canal respectif corresponde à la valeur de volume cumulé la plus élevée, sauf pour un volume de différence qui est inférieur à la dernière valeur de volume déterminée du canal.
o4) Après l'étape n4) du procédé, chaque piston de l'unité cylindre-piston, commandé par le dispositif de commande, est déplacé dans le sens de la décharge de manière à réduire le volume d'air de la chambre de dosage et ainsi à neutraliser la perte de liquide de la pointe de la pipette à hauteur de la valeur de volume accumulée par canal, de la valeur de volume accumulée la plus élevée ou de la valeur moyenne de toutes les valeurs de volume accumulées à la fin de la décharge.
En alternative aux étapes j1) à m1) ou j4) à o4), les étapes suivantes sont réalisées:
j8) Les étapes f) à i) du processus sont répétées pour chaque canal jusqu'à ce que la valeur du volume dans le canal respectif se trouve dans une plage de tolérance spécifiée autour de la valeur de consigne du volume.
k8) Pour chaque canal, les valeurs de volume déterminées successivement sont accumulées et la valeur de volume accumulée est comparée à une valeur de volume maximale spécifiée dans le dispositif de commande.
I8) Les répétitions selon l'étape j8) de procédé sont terminées pour le canal respectif dès que la valeur de volume cumulée correspond à la valeur de volume maximale, sauf pour un volume de différence qui est inférieur à la dernière valeur de volume déterminée pour ce canal.
m8)Après l'étape I8) du processus pour tous les canaux, le liquide résiduel est éjecté de toutes les pointes de pipette au moyen des unités à piston-cylindre et le processus est relancé à partir de l'étape b) du processus ou une entrée est demandée à l'utilisateur.

2. Méthode selon la revendication 1, **caractérisée par** l'étape de processus suivante :
n1) Si la valeur de volume déterminée en dernier lieu à l'étape de procédé i) dans chaque canal se situe dans une plage de tolérance prédéterminée autour de la valeur de consigne du volume, alors après l'étape de procédé I1), avec le réglage des actionneurs réalisé précédemment, des gouttelettes sont délivrées par les pointes de pipette des canaux, commandées par le dispositif de commande, dans des récipients cibles associés (24), à savoir
dans la position de couplage ou dans une position de distribution de liquide préalablement atteinte par la pipette à piston avec l'unité de microdosage.

3. Méthode selon la revendication 2, **caractérisée en ce que**,
dans l'étape de procédé n1), l'émission de gouttelettes est interrompue à l'approche de la valeur du volume de la séquence conformément à l'étape de procédé k1) et la perte de liquide est neutralisée par l'étape de procédé I1).

4. Méthode selon la revendication 1, **caractérisée par** l'étape de procédé suivante :
p4) Après l'étape I4) de procédé, avec le réglage des actionneurs obtenu précédemment, les gouttelettes sont délivrées par les points de pipette des canaux, commandés par le dispositif de commande, dans les récipients cibles associés, soit en position de couplage, soit dans une position de distribution de liquide préalablement approchée par la pipette à piston avec l'unité de microdosage.

5. Méthode selon la revendication 4, **caractérisée en ce que**,
dans l'étape de procédé p4), la distribution de gouttelettes en position de distribution de liquide est interrompue lorsque les gouttelettes s'approchent de la valeur de volume cumulé la plus élevée selon l'étape de procédé m4) ou d'une valeur de volume séquentiel prédéterminée, et la perte de liquide est neutralisée par l'étape de procédé o4).

6. Méthode selon l'une des revendications 1 à 5, **caractérisée en ce que** l'étape I1) ou o4) de la méthode est effectuée simultanément pour tous les ensembles cylindre-piston, en particulier au moyen d'un entraînement commun à tous les pistons.

7. Méthode selon la revendication 1, **caractérisée par** l'étape de procédé suivante :
n8) Si la valeur de volume dans chaque canal déterminée en dernier lieu à l'étape m8) de procédé se situe dans une plage de tolérance prédéterminée autour de la valeur de consigne du volume, alors, après l'étape I8) de procédé, avec le réglage des actionneurs atteint précédemment, des gouttelettes sont délivrées par les points de pipette des canaux, commandés par le dispositif de commande, dans des récipients cibles associés, soit en position de couplage, soit en position de délivrance de liquide préalablement approchée par la pipette à piston avec l'unité de microdosage.

8. Méthode selon la revendication 7, **caractérisée en ce que**,
dans l'étape de procédé n8), la distribution de gouttelettes est interrompue lorsque la valeur volumique maximale selon l'étape de procédé I8) ou une valeur volumique séquentielle prédéterminée est approchée et que la perte de liquide est neutralisée par une étape de procédé effectuée de manière analogue à l'étape de procédé o4).

9. Méthode selon l'une des revendications 1 à 8, **caractérisée en ce que** le réglage de la valeur du volume est terminé lorsqu'un nombre défini par l'utilisateur de répétitions des étapes f) à i) de procédé a été atteint, ou
**en ce que**, selon le résultat de la comparaison de l'étape i) de la méthode, les étapes f) à l1) ou f) à o4) ou f) à m8) sont répétées jusqu'à un événement ou un moment de mise hors service, une entrée de l'utilisateur étant alors de préférence demandée.

10. Méthode selon l'une des revendications 1 à 9, **caractérisée en ce que** les étapes j1) et k1) ou j4) à n4) ou j8) à l8) ne sont pas exécutées simultanément pour les canaux de la pipette à piston, mais sont exécutées dans un ordre précis l'une après l'autre et/ou ne sont pas exécutées simultanément pour des canaux adjacents et au total jusqu'à ce que ces étapes de la méthode soient terminées pour tous les canaux.

11. Méthode selon l'une des revendications 1 à 10, **caractérisée en ce que**, après un changement de liquide et/ou après un changement de le point de pipette, le dispositif de commande de l'étape g) de procédé compare différents réglages et adapte le temps d'actionnement de l'actionneur et/ou d'une lumière stroboscopique et/ou d'une interrogation d'image dans le sens d'un affichage optimal et d'une position centrale de la gouttelette à détecter dans la partie image de la caméra.

12. Méthode selon l'une des revendications 1 à 11, **caractérisée en ce que** sens que le dispositif de commande s'ajuste à l'étape i) du processus pour déformer l'extrémité d'éjection :
- le moment de la déformation par rapport à l'acquisition de l'image à l'étape (g),
- le chemin de l'ascenseur,
- le temps d'arrêt respectif lors du changement de direction de levage,
- la course de précharge et/ou la force de précharge de la déformation de l'extrémité d'éjection,
- à l'extrémité de décharge, la distance entre la déformation et l'ouverture de décharge,
- l'angle entre l'extrémité de l'éjecteur et l'actionneur et/ou
- la dynamique de l'actionneur respectif, en particulier l'accélération en avant, la vitesse d'avance, l'accélération de rétraction et/ou la vitesse de rétraction, en fonction de l'écart de volume déterminé à l'étape i) de la méthode et/ou du contour ou de la position de la gouttelette

13. Méthode selon l'une des revendications 1 à 12, **caractérisée en ce que**, dans l'étape de procédé i), l'utilisateur prescrit préalablement à le dispositif de commande des valeurs d'entrée qui comprennent la plage de tolérance de la valeur de consigne du volume, la valeur du volume séquentiel, le volume résiduel, le liquide de dosage, les données relatives au liquide de dosage, les paramètres du servomoteur réglable et/ou les données ou algorithmes de réglage du servomoteur par le dispositif de commande,
l'actionneur n'étant de préférence réglé par le dispositif de commande que si l'écart de volume est supérieur à la plage de tolérance et/ou l'actionneur est ajusté de manière modifiée après une étape de processus correspondante, en tenant compte de l'approximation de l'écart de volume par rapport à la plage de tolérance par rapport à une étape de procédé précédente i).
